(19) Europäisches Patentamt
European Patent Office
Office européen des brevets

(11) EP 1 967 443 A2

(12) EUROPEAN PATENT APPLICATION

(43) Date of publication:
10.09.2008 Bulletin 2008/37

(51) Int Cl.:
B62D 5/04 (2006.01)

(21) Application number: 08004080.1

(22) Date of filing: 05.03.2008

(84) Designated Contracting States:
AT BE BG CH CY CZ DE DK EE ES FI FR GB GR
HR HU IE IS IT LI LT LU LV MC MT NL NO PL PT
RO SE SI SK TR
Designated Extension States:
AL BA MK RS

(30) Priority: 09.03.2007 JP 2007060243
15.05.2007 JP 2007129057
22.11.2007 JP 2007302607

(71) Applicant: NSK Ltd.
Tokyo 141-8560 (JP)

(72) Inventors:
• Reungwetwattana, Apiwat
Maebashi-shi, Gunma 371-8527 (JP)
• Shimokawabe, Satoshi
Maebashi-shi, Gunma 371-8527 (JP)

(74) Representative: Klingseisen, Franz
Klingseisen & Partner
Postfach 10 15 61
80089 München (DE)

(54) **Electric power steering apparatus, controlling method thereof and program for electric power steering apparatus**

(57) An electric power steering apparatus controlling a steering assist motor (20) based on a steering assist command value (I) calculated based on steering torque (T) occurring ta a steering system of a vehicle and a vehicle speed (V), and a current detection value (Im) of the steering assist motor (20) which gives a steeririg assist force to the steering system, wherein a compensation control section (70) conducts compensation control that compensates steering characteristics of the steering system by compensating the steering assist command value (I), and changes a compensation amount of the cornpensation control based on longitudinal acceleration αx of the vehicle.

*F I G. 1*

**Description**

BACKGROUND OF THE INVENTION

Field of the Invention

The present invention relates to an electric power steering apparatus, a control method thereof and a program for the electric power steering apparatus, and in particular relates to an electric power steering apparatus capable of at least preventing vehicle drift and preferably preventing torque steer and vehicle instability during braking, a control method thereof and a program for the electric power steering apparatus.

Description of the Related Art

Conventionally, for a vehicle such as a passenger automobile and a truck, an electric power steering apparatus is in widespread use as a steering apparatus, in which a driver drives an electric motor according to steering torque steer a steering wheel to apply a steering assist force to a steering mechanism to alleviate steering force of the driver. This electric power steering apparatus is designed to apply a drive force of the steering assist motor or an assist force to a pinion shaft or a rack shaft configuring a steering shaft or a steering gear through a reduction gear mechanism configured by a gear and a belt.

Here, a vehicle such as a front engine front drive (FF) vehicle and a four-wheel drive (4WD) vehicle with wheels for steering, that is, steering control wheels operating as drive wheels for running is significantly restricted by the layout for an engine room and makes it difficult to establish equal rigidity in left and right of a differential apparatus distributing torque being output from the engine to left and right wheels. For example, due to arrangement of the engine and the transmission, the difference in length of the left and right shafts of a drive shaft linked to a differential apparatus is large and occasionally gives rise to difference in flexion angle for the left and right joints. Therefore, turbulence in vehicle traveling takes place to cause the steering force and the steering retaining force to vary and compel difficult and complicated steering operation to a driver in the end.

Specifically, due to unbalance of drive force transmitted to the steering control wheels, at acceleration and startup when change in the drive force is significant to make the variation of vehicle speed significant, the phenomena bringing the steering wheel out of control, that is, torque steer occurs, giving rise to a problem. In addition, during braking, due to unbalance of the braking force transmitted to the wheels and force from various directions to tires and suspension, phenomena causing vehicle instability disturbing the running orientation, that is, vehicle instability during braking occurs during a sudden brake with significant change in braking force and significant vehicle deceleration, giving rise to a problem.

For example, for an electric power steering apparatus of JP11-263,233A (hereinafter referred to as Patent Document 1), in order to prevent torque steer of an FF car, technology for conducting convergence control on a vehicle with an angular velocity estimation value of a motor and for changing gain of convergence control to become small when acceleration of a vehicle is not more than a predetermined value and gain to become large when acceleration exceeds a predetermined value is proposed.

In addition, for an electric power steering apparatus of JP2006-213085A (hereinafter referred to as Patent Document 2), technology for calculating longitudinal acceleration $\alpha$ in order to effectively suppress torque steer occurring in a vehicle with the steering wheels being also used as the drive wheels and calculating an assist correction amount A becoming larger according to an increase in the longitudinal acceleration $\alpha$ so that the target assist force to become a target value of drive control on a motor for steering assist is designed to undergo increase correction with this assist correction amount A in the case where that longitudinal acceleration $\alpha$ exceeds the positive lower limit value $\alpha_0$ to give rise to possibility of occurrence of torque steer is proposed.

However, in the conventional example described in the Patent Document 1, convergence control of the vehicle is conducted by the angular velocity estimation value of the motor, and the gain of the convergence control is only changed so as to make the gain of the convergence control small when the acceleration of the vehicle is a predetermined value or less and to make the gain large when the acceleration exceeds the predetermined value, and there is the unsolved problem that nothing is mentioned concerning the technique of preventing the vehicle instability during braking.

Further, in the conventional example described in the Patent Document 2, the assist correction amount A is determined by only the acceleration $\alpha$. Therefore, there is the unsolved problem that the assist correction amount A is determined even in the state in which torque steer at the time of accelerating does not actually occur and a sense of incompatibility is given to a driver, and there is also the unsolved problem that vehicle instability during braking is not considered at all.

SUMMARY OF THE INVENTION

Thus, the present invention is made in view of the above described problem, and has an object to provide an electric power steering apparatus capable of at least preventing vehicle drift and preferably preventing torque steer and vehicle instability during braking, a control method thereof and programming for the electric power steering.

In order to solve the aforementioned problems and attain the object, the present invention is an electric power steering apparatus controlling a steering assist motor based on a steering assist command value calculated based on at least steering torque occurring to a steering system of a vehicle, and a current detection value of the steering assist motor which gives a steering assist force to the aforesaid steering system, and provided by including compensation control means conducting compensation control that compensates steering characteristics of the aforesaid steering system by compensating the aforesaid steering assist command value, and determining a compensation amount of the aforesaid compensation control based on longitudinal acceleration of the aforesaid vehicle.

Further, according to a preferable mode of the present invention, the aforesaid compensation control means desirably switches a control content of the aforesaid compensation control based on a sign of the longitudinal acceleration of the aforesaid vehicle.

Further, according to a preferable mode of the present invention, the aforesaid compensation control includes torque differentiation compensation control for enhancing responsiveness, convergence compensation control that controls steering wheel rotation in a direction to inhibit the steering wheel rotation, and inertia compensation control that assists the steering wheel rotation and controls the steering wheel rotation in a rotating direction, and the aforesaid compensation control means desirably changes compensation amounts of the aforesaid torque differentiation compensation control, the aforesaid convergence compensation control and the aforesaid inertia compensation control, based on the longitudinal acceleration of the aforesaid vehicle.

Further, according to a preferable mode of the present invention, when the longitudinal acceleration of the aforesaid vehicle is a predetermined positive value or more, the aforesaid compensation control means desirably increases the compensation amount of the aforesaid torque differentiation compensation control as compared with a time of ordinary control, increases the compensation amount of the aforesaid convergence compensation control as compared with a time of ordinary control, and decreases a control amount of the aforesaid inertia compensation control as compared with a time of ordinary control.

Further, according to a preferable mode of the present invention, when the longitudinal acceleration of the aforesaid vehicle is a predetermined negative value or less, the aforesaid compensation control means desirably decreases the compensation amount of the aforesaid torque differentiation compensation control as compared with a time of ordinary control, increases the compensation amount of the aforesaid convergence compensation control as compared with a time of ordinary control, and decreases the compensation amount of the aforesaid inertia compensation control as compared with a time of ordinary control.

Further, according to a preferable mode of the present invention, the aforesaid compensation control means desirably changes the aforesaid predetermined value based on an SAT (self-aligning torque) value or a steering angle detection value.

In order to solve the aforementioned problems and attain the object, the present invention is an electric power steering apparatus including steering torque detecting means detecting steering torque which is inputted in a steering system turning a steering control wheel, a steering assist motor generating steering assist torque which is given to the aforesaid steering system, and steering assist force control means calculating a current command value based on at least the steering torque detected by the aforesaid steering torque detecting means to conduct drive control of the aforesaid steering assist motor, and provided by including self-aligning torque estimating means estimating self-aligning torque which is inputted in the aforesaid steering system from the aforesaid steering control wheel side, and longitudinal acceleration and deceleration detecting means detecting vehicle longitudinal acceleration and deceleration, and the aforesaid steering assist force control means is provided by including steering assist force correcting means correcting a steering assist force generated by the aforesaid steering assist motor so as to suppress instability behavior of a vehicle occurring during acceleration and deceleration, based on the self-aligning torque estimated by the aforesaid self-aligning torque estimating means, and the acceleration and deceleration detected by the aforesaid longitudinal acceleration and deceleration detecting means.

According to a preferable mode of the present invention, the aforesaid steering assist force correcting means desirably makes a correction amount for correcting the aforesaid steering assist force larger as the aforesaid self-aligning torque becomes larger.

Further, according to a preferable mode of the present invention, the aforesaid steering assist force correcting means is desirably configured to make a correction amount for correcting the aforesaid steering assist force larger as the aforesaid longitudinal acceleration and deceleration become larger.

Further, according to a preferable mode of the present invention, the aforesaid steering assist force correcting means is desirably configured so as to correct the steering assist force by correcting the aforesaid current command value.

Further, according to a preferable mode of the present invention, the aforesaid steering assist force correcting means is desirably configured to set a correction amount which makes the aforesaid current command value larger at a time of acceleration of the vehicle.

Further, according to a preferable mode of the present invention, the aforesaid steering assist force correcting means is desirably configured to set a correction amount which makes the aforesaid current command value smaller at a time of deceleration of the vehicle.

Further, according to a preferable mode of the present invention, the aforesaid steering assist force correcting means is desirably configured to change the aforesaid correction amount in accordance with the steering torque detected by the aforesaid steering torque detecting means.

Further, according to a preferable mode of the present invention, the electric power steering apparatus desirably further includes steering angle detecting means detecting a steering angle of the aforesaid steering system, and the aforesaid steering assist force correcting means is desirably configured to change the aforesaid correction amount in accordance with the steering angle detected by the aforesaid steering angle detecting means.

In order to solve the aforementioned problems and attain the object, the present invention is an electric power steering apparatus including steering torque detecting means detecting steering torque which is inputted in a steering system turning a steering control wheel, a steering assist motor generating steering assist torque which is given to the aforesaid steering system, and steering assist force control means calculating a current command value based on at least the steering torque detected by the aforesaid steering torque detecting means to conduct drive control of the aforesaid electric motor, and provided by including deceleration detecting means detecting vehicle deceleration, and the aforesaid steering assist force control means is provided by including steering assist force correcting means calculating a correction value for suppressing instability behavior of a vehicle occurring during deceleration based on the deceleration detected by the aforesaid deceleration detecting means, and correcting a steering assist force generated by the aforesaid steering assist motor based on the calculated correction value.

According to a preferable mode of the present invention, the aforesaid steering assist force correcting means is desirably configured to correct the aforesaid steering assist force by adding the aforesaid correction value to the aforesaid current command value.

Further, according to a preferable mode of the present invention, the aforesaid steering assist force correcting means is desirably configured to correct the aforesaid steering assist force by multiplying the aforesaid current command value by the aforesaid correcting value.

Further, according to a preferable mode of the present invention, the aforesaid steering assist force correcting means is desirably configured to make the aforesaid correction value larger as the deceleration becomes larger.

Further, according to a preferable mode of the present invention, the aforesaid steering assist force correcting means is desirably configured to correct the steering assist force by correcting the aforesaid current command value.

Further, according to a preferable mode of the present invention, the aforesaid steering assist force correcting means is desirably configured to change the aforesaid correction value in accordance with the steering torque detected by the aforesaid steering torque detecting means.

Further, according to a preferable mode of the present invention, the electric power steering apparatus desirably further includes steering angle detecting means detecting a steering angle of the aforesaid steering mechanism, and the aforesaid steering assist force correcting means is desirably configured to change the aforesaid correction value in accordance with the steering angle detected by the aforesaid steering angle detecting means.

According to the present invention, the electric power steering apparatus controlling a steering assist motor based on a steering assist command value calculated based on at least steering torque occurring to a steering system of a vehicle, and a current detection value of the steering assist motor which gives a steering assist force to the aforesaid steering system, includes compensation control means conducting compensation control that compensates steering characteristics of the aforesaid steering system by compensating the aforesaid steering assist command value, and determining a compensation amount of the aforesaid compensation control based on longitudinal acceleration of the aforesaid vehicle. Therefore, torque steer and vehicle instability during braking can be suppressed by changing the compensation amount of the compensation control of the steering characteristics in accordance with acceleration and deceleration, and the effect of being capable of providing an electric power steering apparatus capable of preventing torque steer and vehicle instability during braking is provided.

Further, according to the present invention, the steering assist force generated by the electric motor is corrected so as to suppress instability behavior of the vehicle occurring during acceleration and deceleration, based on the self-aligning torque detected by the self-aligning torque detecting means and the acceleration and deceleration detected by the acceleration and deceleration detecting means. Therefore, the effect of being capable of properly suppressing torque steer occurring during acceleration including the starting time of the vehicle, and being capable of properly suppressing the vehicle instability during braking occurring during braking of the vehicle can be provided.

Further, according to the present invention, the deceleration of the vehicle is detected, the correction value which suppresses the instability behavior of the vehicle occurring during deceleration is calculated based on the detected deceleration, and the steering assist force generated by the electric motor is corrected to decrease based on the calculated correction value. Therefore, there is provided the effect of being capable of properly suppressing the phenomenon which causes the disturbance of the traveling course, that is, the vehicle instability during braking, at the time of abrupt braking in which change in the braking force is large due to imbalance of the braking force transmitted to the left and right wheels at the time of braking and the forces from the various directions to the tires and suspension.

BRIEF DESCRIPTION OF THE DRAWINGS

FIG. 1 is a diagram illustrating a general configuration of an electric power steering apparatus;
FIG. 2 is a drawing illustrating a hardware configuration of a control unit in FIG. 1;
FIG. 3 is a diagram illustrating a function (a functional configuration of an MCU) which is realized by CPU executing a motor control program;
FIG. 4 is a drawing diagram for describing a state of torque occurring from a ground plane to steering;
FIG. 5 is a flow chart for describing an operation example 1 of a compare unit;
FIG. 6 is a drawing illustrating a function on torque differentiation correction gain $Kt_1$, convergence correction gain $Kd_1$ and inertia compensation correction gain $Ki_1$;
FIG. 7 is a flow chart for describing an operation example 2 of the compare unit;
FIG. 8 is a drawing illustrating a function on torque differentiation correction gain $Kt_2$, convergence correction gain $Kd_2$ and inertia compensation correction gain $Ki_2$;
FIG. 9 is a flow chart in the case where the operation example 1 and the operation example 2 are combined;
FIG. 10 is a functional configuration diagram of an MCU related to a second embodiment of the present invention (part 1);
FIG. 11 is a diagram illustrating an example of a map illustrating relation between a SAT value and a predetermined value;
FIG. 12 is a functional configuration diagram of an MCU related to the second embodiment (part 2);
FIG. 13 is a diagram illustrating an example of a map illustrating relation between a steering angle detection value and a predetermined value;
FIG. 14 is a diagram illustrating a schematic configuration of an electric power steering apparatus related to a third embodiment of the present invention;
FIG. 15 is a block diagram illustrating a specific configuration of a control apparatus in a third embodiment;
FIG. 16 is a characteristic line diagram illustrating an steering assist torque command value calculation map illustrating relation with steering assist torque command value including vehicle speed as a parameter;
FIG. 17 is a characteristic line diagram illustrating an acceleration and deceleration correction gain calculation map expressing relation between the longitudinal acceleration and deceleration and the acceleration and deceleration correction gain;
FIG. 18 is a characteristic line diagram illustrating a steering torque correction gain calculation map expressing relation between an absolute value of the steering torque and the steering torque correction gain;
FIG. 19 is a block diagram of the control apparatus illustrating a fourth embodiment of the present invention;
FIG. 20 is a characteristic line diagram illustrating a steering angle correction gain calculation map expressing relation between the steering angle applicable to the fourth embodiment and the steering angle correction gain;
FIG. 21 is a flow chart illustrating an example of execution steering assist control processing procedure with a microcomputer;
FIG. 22 is a flow chart illustrating an example of steering assist force correction value calculation processing procedure in FIG. 21;
FIG. 23 is a flow chart illustrating another example of steering assist force correction value calculation processing procedure in FIG. 21;
FIG. 24 is a block diagram illustrating an embodiment in the case of applying a motor with a brush;
FIG. 25 is a block diagram illustrating a specific configuration of a control apparatus in a fifth embodiment of the present invention;
FIG. 26 is a characteristic line diagram illustrating a steering assist force correction gain calculation map expressing relation between vehicle deceleration and steering assist force correction gain;
FIG. 27 is a characteristic line diagram illustrating a steering torque correction gain calculation map expressing relation between absolute value of steering torque and steering torque correction gain;
FIG. 28 is a block diagram of a control apparatus illustrating a sixth embodiment of the present invention;
FIG. 29 is a characteristic line diagram illustrating an steering assist force correction gain calculation map illustrating relation between steering angle applicable to the sixth embodiment and steering angle correction gain;

FIG. 30 is a block diagram of a control apparatus illustrating a seventh embodiment of the present invention;
FIG. 31 is a characteristic line diagram illustrating an steering assist force correction gain calculation map illustrating relation between vehicle acceleration and deceleration applicable to the seventh embodiment and steering assist force correction gain;
FIG. 32 is a flow chart illustrating an example of steering assist force correction value calculation processing procedure of the seventh embodiment;
FIG. 33 is a flow chart illustrating another example of steering assist force correction value calculation processing procedure in FIG. 32;
FIG. 34 is a flow chart illustrating still another example of steering assist force correction value calculation processing procedure in FIG. 32; and
FIG. 35 is a block diagram illustrating an embodiment in the case of applying a motor with a brush.

DETAILED DESCRIPTION OF THE PREFERRED EMBODIMENTS

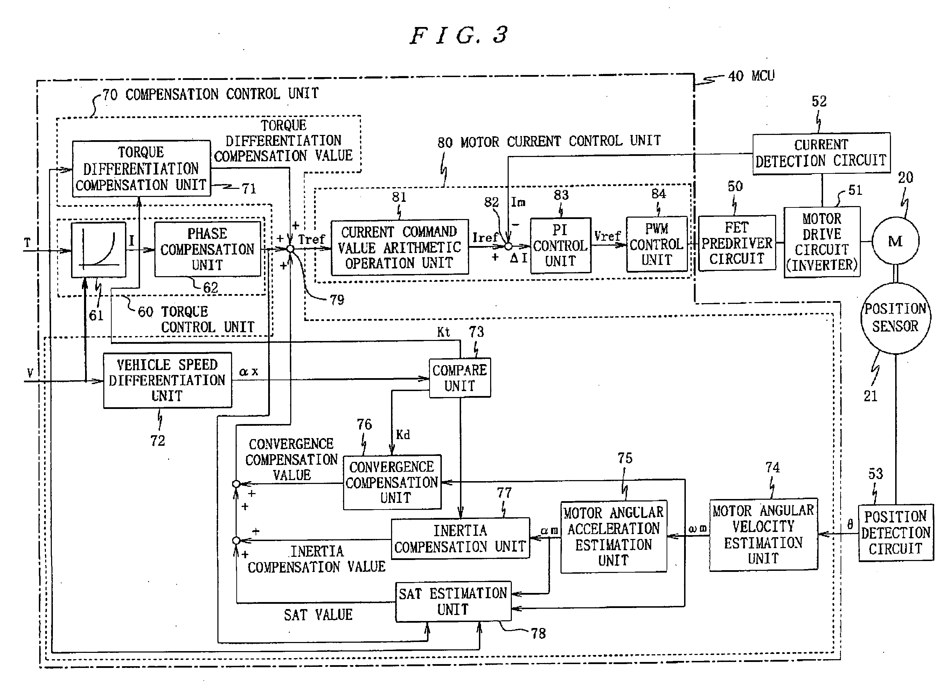

A first embodiment of the present invention will be described in detail with reference to the drawings below. Here, this invention will not be limited to this embodiment. In addition, components in the following embodiments will include components which those skilled in the art can easily imagine or which is substantially the same components.

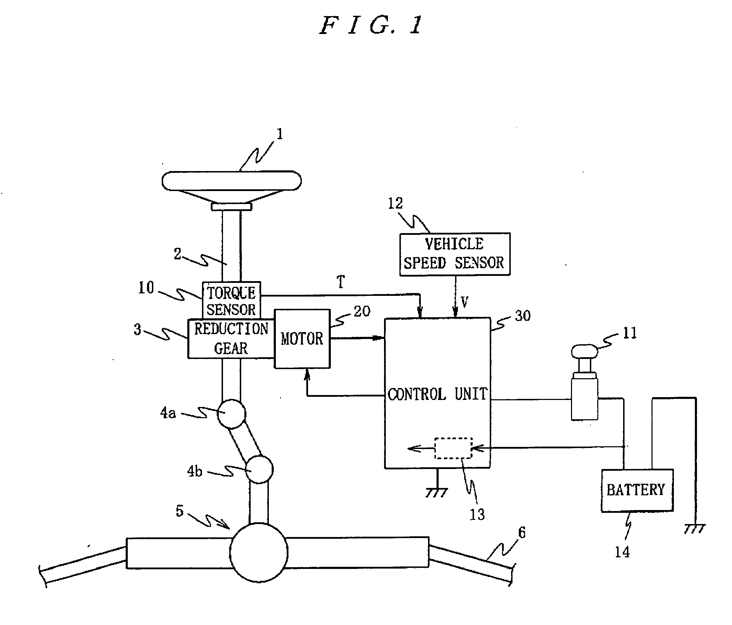

FIG. 1 is a diagram illustrating a general configuration of an electric power steering apparatus. In FIG. 1, a steering shaft 2 of a steering wheel 1 is linked to a tie rod 6 of a steering control wheel via a reduction gear 3, universal joints 4a and 4b, a pinion rack mechanism 5. The steering shaft 2 is provided with a torque sensor 10 detecting steering torque T of the steering wheel 1. A steering assist motor 20 assisting steering force of the steering wheel 1 is linked to the steering shaft 2 through the reduction gear 3.
Here, the steering assist motor 20 is, for example, a brushless motor and a brush motor. A control unit 30 controlling the electric power steering apparatus is supplied with electric power from a battery 14 via a built-in power relay 13 and is supplied with an ignition signal from an ignition key 11. In addition, the control unit 30 conducts arithmetic operation to derive a steering assist command value of the steering assist motor 20 based on steering torque T detected by the torque sensor 10 and vehicle speed V detected by a vehicle speed sensor 12 and controls the steering assist motor 20 to be driven based on a current detection value of the steering assist motor 20 and a current command value according to the steering assist command value so that the current detection value of the steering assist motor 20 follows the current command value.

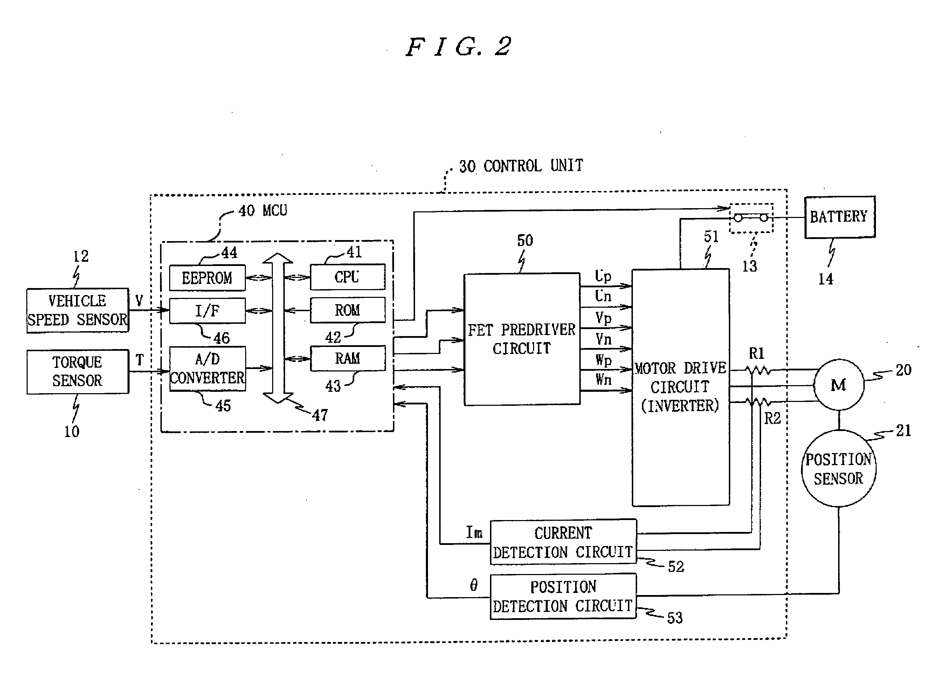

FIG. 2 is a drawing illustrating a hardware configuration of a control unit 30 in FIG. 1. The control unit 30 comprises, as illustrated in FIG. 2, an MCU (micro control unit) 40, a FET predriver circuit 50, a motor drive circuit (inverter) 51, a current detection circuit 52, a position detection circuit 53 and the like.
The MCU 40 comprises a CPU 41 (control means), a ROM 42, a RAM 43, an EEPROM (nonvolatile memory) 44, an A/D converter 45, an interface 46, a bus 47 and the like. The CPU 41 executes the respective types of programs stored in the ROM 42 to control the electric power steering apparatus.
The ROM 42 stores the respective types of programs executed by the CPU 41. Specifically, the ROM 42 stores, for example, a motor control program for executing a motor control processing (steering assist processing) which controls the steering assist motor 20 and an error diagnosis program for executing error diagnosis processing.
In the case where the CPU 41 executes a program, the RAM 43 is used as its work area and stores data required in the course of processing and the result of processing and the like.
The EEPROM 44 is nonvolatile memory capable of retaining the stored contents even after the power is cut off and control data and the like which the CPU 41 uses for controlling the electric power steering apparatus are stored there. Here, the EEPROM is used as nonvolatile memory. However, the present invention will not be limited hereto but nonvolatile memory such as FLASH-ROM and SDRAM can be adopted for use.
The A/D converter 45 gets inputs such as steering torque T from the torque sensor 10, the current detection value Im on the steering assist motor 20 from the current detection circuit 52 and the motor rotation angle signal θ from the position detection circuit 53 and converts them to digital signals. The interface 46 is for receiving the vehicle speed V (vehicle speed pulse) from the vehicle speed sensor 12 through CAN communication.
In the above described configuration, the CPU 41 executes a motor control program stored in the ROM 42 and, thereby, functions as torque control means, motor control means and compensation control means (see FIG. 3).
The FET predriver circuit 50 converts the PWM control signals for the respective phases of the UVW being input from the MCU 40 to positive and negative conduction signals (Up, Un, Vp, Vn, Wp and Wn) for the respective phases and outputs them to the motor drive circuit 51.
The motor drive circuit 51 comprises a bridge circuit consisting of a pair of FET switching elements for three portions for the U phase, the V phase and the W phase and reflux diodes are connected to the respective FET switching element in parallel. A direct voltage is applied from a battery 14 to this bridge circuit through the power relay 13. The conduction signal is input from the FET predriver 50 to the control terminal (gate terminal) of each FET switching element.

The direct current voltage applied to the motor drive circuit 51 is converted to three-phase alternate current voltage by the switching operation of the FET switching element inside the motor drive circuit 51 and, thereby, the steering assist motor 20 is driven. Shunt resistance R1 and R2 is connected to this bridge circuit. The current detection circuit 52 is connected to this shunt resistance R1 and R2 to detect, thereby, the current detection value Im of the steering assist motor 20.

The position detection circuit 53 provides the position sensor 21 with an excitation current and outputs an output signal from the position sensor 21 to the A/D converter 45 as a motor rotation angle signal $\theta$.

FIG. 3 is a diagram illustrating a function (a functional configuration of an MCU) which is realized by CPU 41 executing a motor control program.

As illustrated in FIG. 3, the MCU 40 is configured by a torque control unit 60 calculating the steering assist command value based on the steering torque T and the vehicle speed V, a compensation control unit 70 as compensation control means for compensating the steering assist command value and, thereby, conducting compensation control to compensate steering property of the steering system and determining a compensation amount of the compensation control based on longitudinal acceleration $\alpha x$ of a vehicle and a motor current detection unit 80 as motor current control means conducting the control related to the drive of the steering assist motor 20.

In the MCU 40 with the above described configuration, the steering torque T detected by the torque sensor 10 is input to an assist amount arithmetic operation unit 61 of the torque control unit 60, a torque differentiation compensation unit 71 of the compensation control unit 70 and an SAT (self-aligning torque) estimation unit 78. In addition, the vehicle speed V detected by the vehicle speed sensor 12 is input to an assist amount arithmetic operation unit 61 of the torque control unit 60 and a vehicle speed differentiation unit 72 of the compensation control unit 70.

The torque control unit 60 comprises the assist amount arithmetic operation unit 61 and a phase compensation unit 62. The steering torque T detected by the torque sensor 10 and the vehicle speed V detected by the vehicle speed sensor 12 are input to the assist amount arithmetic operation unit 61. The assist amount arithmetic operation unit 61 stores the steering assist command value I corresponding to the steering torque T with vehicle speed V as parameter, determines the steering assist command value I being a control target value of the current to be supplied to the steering assist motor 20 based on the steering torque T and the vehicle speed V to be input and outputs it to the phase compensation unit 62. The phase compensation unit 62 causes the steering assist command value I to undergo phase compensation for an output to an adder unit 79 in order to enhance stability of the steering system.

The compensation control unit 70 comprises the torque differentiation compensation unit 71, the vehicle speed differentiation unit 72, the compare unit 73, the motor angular velocity estimation unit 74, the motor angular acceleration estimation unit 75, the convergence compensation unit 76, the inertia compensation unit 77, the SAT estimation unit 78 and the adder unit 79.

The adder unit 79 adds the torque differentiation compensation value (compensation amount) of the torque differentiation compensation unit 71, convergence compensation value (compensation amount) of the convergence compensation unit 76, the inertia compensation value (compensation amount) of the inertia compensation unit 77 and the SAT value calculated by the SAT estimation unit 78 to the steering assist command value I having undergone phase compensation with the phase compensation unit 62 to determine a torque command value Tref. Thereby, the torque command value Tref with steering property having undergone compensation is determined. The vehicle speed differentiation unit 72 differentiates the vehicle speed V being input from the vehicle speed sensor 12 to calculate longitudinal acceleration $\alpha x$ of a vehicle for an output to the compare unit 73.

The compare unit 73 compares the longitudinal acceleration $\alpha x$ with a predetermined value (positive predetermined value $a_1$ and negative predetermined value $a_2$) of a vehicle in order to alleviate torque steer and instability at braking as to be described below to determine the torque differentiation gain Kt of the torque differentiation compensation unit 71, the convergence gain Kd of the convergence compensation unit 216, the inertia compensation gain Ki of the inertia compensation unit 217 respectively for outputs to the torque differentiation compensation unit 71, the convergence compensation unit 76 and the inertia compensation unit 77.

The torque differentiation compensation unit 71 is for enhancing responsiveness and is a compensation unit of a feedforward system enhancing responsiveness of controlling in the vicinity of the neutral point of steering to realize smooth steering and calculates the torque differentiation compensation value based on the steering torque T being input from the torque sensor 10, the torque differentiation gain Kt being input from the compare unit 73 for an output to the adder unit 79.

The motor angular velocity estimation unit 74 estimates motor angular velocity $\omega m$ based on a motor rotation angle signal $\theta$ being input from the position detection circuit 53 and outputs the estimated motor angular velocity $\omega m$ to the motor angular acceleration estimation unit 75, the convergence compensation unit 76 and the SAT estimation unit 78.

The motor angular acceleration estimation unit 75 estimates the motor angular acceleration $\alpha m$ based on the motor angular velocity $\omega m$ being input from the motor angular velocity estimation unit 74 and outputs the estimated motor angular acceleration $\alpha m$ to the inertia compensation unit 77 and the SAT estimation unit 78.

The convergence compensation unit 78 is in charge of controlling in the direction of preventing steering wheel rotation and, specifically, is designed to brake against swinging operation of the steering wheel in order to improve convergence of yaw of a vehicle to calculate the convergence compensation value for compensating convergence of yaw of the vehicle based on the motor angular velocity ωm being input and the convergence compensation gain Kd being input from the compare unit 73 for an output to the adder unit 79.

The inertia compensation unit 77 is in charge of controlling in the direction of supporting rotation of the steering wheel and, specifically, assisting the portion equivalent to the force generated by inertia of the steering assist motor 20 to prevent deterioration of inertia feeling or responsiveness on controlling and calculates inertia compensation value for compensating inertia of the steering assist motor 20 based on motor angular acceleration αm being input and inertia compensation gain Ki calculated by the compare unit 73 for an output to the adder unit 79.

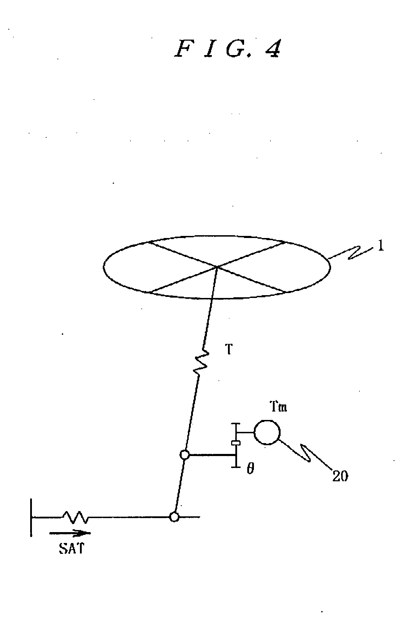

The SAT estimation unit 78 is designed to supply the steering wheel with appropriate ground plane information as reaction force; the steering torque T, the steering assist command value I of the assist amount arithmetic operation unit 201, the motor angular velocity ωm and the motor angular acceleration αm are input thereto; and the SAT estimation unit 78 estimates the SAT value according to the following equation (1). Here, a state of torque occurring from a ground plane to steering will be illustrated in FIG. 4 and be described. A driver steers the steering wheel to generate the steering torque T. According to the steering torque T, the steering assist motor 20 generates the assist torque Tm. Consequently, the wheel is turned so that SAT is generated as reaction force. In addition, at that occasion, inertia J of the steering assist motor 20 and friction (static friction) Fr generates torque to become resistance against the steering wheel steering. Considering balance of these forces, an equation of motion such as the following expression (1) is obtained.

$$J \cdot \alpha m + Fr \cdot sign(\omega m) + SAT = Tm + T \quad \ldots \ldots \quad (1)$$

Here, the above described expression (1) undergoes Laplace transform with 0 being the initial value to solve on the SAT to derive an expression (2) being described below.

$$SAT(s) = Tm(s) + T(s) - J \cdot \alpha m(s) - Fr \cdot sign(\omega m(s)) \quad \ldots \ldots \quad (2)$$

As being apparent from the above described expression (2), by obtaining inertia J of the steering assist motor 20 and the static friction Fr as constants in advance, it is possible to estimate the SAT (self-aligning torque) value with the motor angular velocity ωm, the motor angular acceleration αm, the assist torque Tm and the steering torque T. Here, the assist torque Tm is proportional to the steering assist current command value Iref and, therefore, the steering assist current command value Iref is applied instead of the assist torque Tm.

A motor current control unit 80 comprises a current command value arithmetic operation unit 81, a subtractor unit 82, a PI control unit 83 and a PWM control unit 84.

The adder 79 inputs the torque command value Tref to the current command value arithmetic operation unit 81, which determines the current command value Iref based on the relevant torque command value Tref for outputting to the subtractor 82. Here, the brushless motor also inputs the rotor angle of the rotor besides the torque command value Tref to the current command value arithmetic operation unit 81 so that the current command value Iref is determined.

On the other hand, the motor current of the steering assist motor 20 is detected by the current detection circuit 52 as the current detection value Im and is input to the subtractor unit 82 together with the current command value Iref. The subtractor unit 82 calculates the deviation ΔI=Iref-Im therefrom for outputting to the PI (proportional-integral) control unit 83. The PI (proportional-integral) control unit 83 outputs the voltage compensation amount Vref to the PWM control unit 84 as proportional-integral output of the deviation ΔI. The PWM control unit 84 PWM-processes the voltage compensation amount Vref to output the PWM control signal of the respective phases of UVW. This PWM control signal is input to the FET predriver circuit 50 so that the steering assist motor 20 is driven through the FET predriver circuit 50 and the motor driver circuit 51.

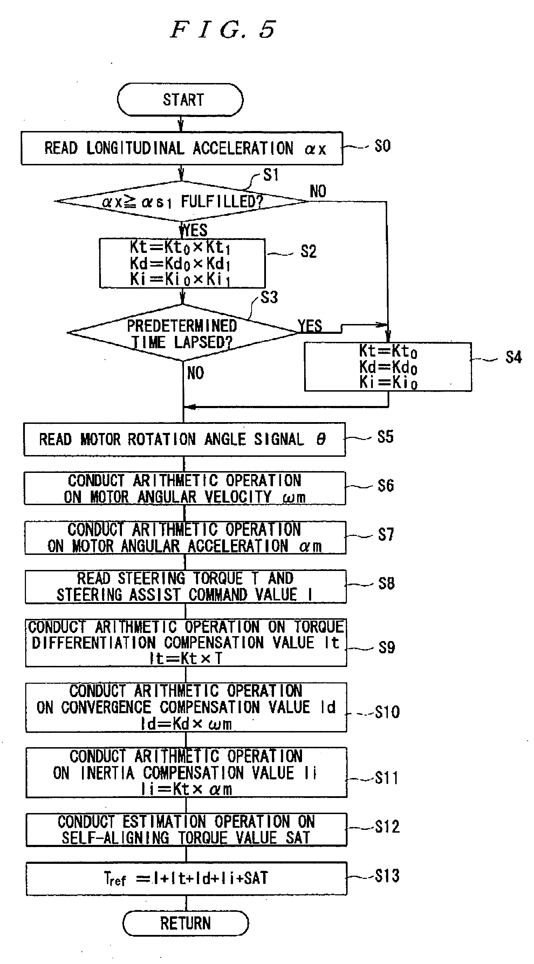

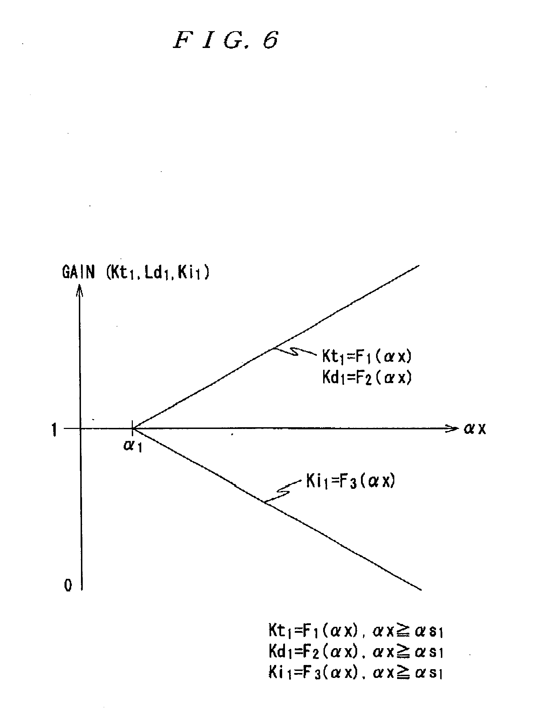

An operation example 1 of the MCU 40 of the above described configuration will be described with reference to FIG. 5 and FIG. 6. FIG. 5 is a flow chart for describing an operation example 1 of the compensation control unit. FIG. 6 is a drawing illustrating a function on torque differentiation correction gain $Kt_1$, convergence correction gain $Kd_1$ and inertia compensation correction gain $Ki_1$. For this operation example 1, suppression control on torque steer will be described.

As described above, a vehicle with the wheel for steering working as a drive wheel for traveling as in the case of FF vehicles and 4WD vehicles generates torque steer at the time of acceleration and starting (αx is large) causing a large change in drive force due to unbalance of the drive force to be transmitted. In this case, the motion of steering is transmitted as reverse input torque on the steering shaft 2 through the tie rod 6 and the pinion rack mechanism 5. The torque sensor 10 detects torque according to this reverse input to drive the steering assist motor 20 based on this detected torque so that torque steer is assisted in the direction of alleviating the torque steer.

However, the torque sensor 10 detects the reverse input torque through the transmission mechanism of the respective units. Thereafter, the torque steer is assisted in the direction of alleviating the torque steer. Therefore, assisting in the direction of alleviating the torque steer will be delayed to occur later than the vehicle behavior so that suppression against the torque steer is insufficient. Therefore, for the operation example 1, torque differentiation compensation control of the torque differentiation compensation unit 71 of the feed-forwarding system is used for suppressing the torque steer to increase its compensation amount more than the amount at the time of normal controlling. Thereby, delay in assisting is eliminated to alleviate the torque steer.

In addition, for the operation example 1, by using convergence control of the convergence compensation unit 76 for suppressing the torque steer and increasing its compensation amount more than the amount at the time of the normal controlling, the steering shaft 2 is made to be hardly apt to move in response to the reverse input torque to alleviate the torque steer.

Moreover, for the operation example 1, by using inertia compensation control of the inertia compensation unit 77 for suppressing the torque steer and decreasing its compensation amount more than the amount at the time of the normal controlling, the response of the steering assist motor 20 is delayed and the steering shaft 2 is made to be hardly apt to move in response to the reverse input torque to alleviate the torque steer.

In FIG. 5, reference characters Kt denote a torque differentiation gain; reference characters Kd denote a convergence gain; reference characters Ki denote a inertia compensation gain; reference characters and numeral $Kt_0$ denote a torque differentiation gain at the time of normal controlling; reference characters and numeral $Kd_0$ denote a convergence gain at the time of normal controlling; reference characters and numeral $Ki_0$ denote a inertia compensation gain at the time of normal controlling; reference characters and numeral $Kt_1$ denote a torque differentiation correction gain, reference characters $Kd_1$ and numeral denote a convergence correction gain; reference characters and numeral $Ki_1$ denotes a inertia compensation correction gai; reference characters $\alpha x$ denote a longitudinal acceleration of a vehicle subjected to vehicle speed differentiation; and reference characters and numeral $\alpha s_1$ denote a positive predetermined value.

FIG. 6 illustrates a function on the above described torque differentiation correction gain $Kt_1$, the above described convergence correction gain $Kd_1$ and the above described inertia compensation correction gain $Ki_1$, where abscissae represent longitudinal acceleration $\alpha x$ of a vehicle and ordinates represent gain. In the drawing, the case of $\alpha x \geq \alpha s_1$ (positive predetermined value) establishes the torque differentiation correction gain $Kt_1 = F_1(\alpha x)$, convergence correction gain $Kd_1 = F_2(\alpha x)$, the above described inertia compensation correction gain $Ki_1 = F_3(\alpha x)$. The torque differentiation correction gain $Kt_1$ and the convergence correction gain $Kd_1$ get larger as $\alpha x$ gets larger. On the other hand, the inertia compensation correction gain $Ki_1$ gets smaller as $\alpha x$ gets larger.

Here, in the drawing, $F_1(\alpha x)$, $F_2(\alpha x)$ and $F_3(\alpha x)$ are linear functions but can be nonlinear functions. In addition, for the torque differentiation correction gain $Kt_1$, the above described convergence correction gain $Kd_1$ and the above described inertia compensation correction gain $Ki_1$, the positive predetermined value $\alpha s_1$ is commonly used, but different values can be used respectively.

As for the compensation control processing executed by the compensation control unit 70 illustrated in FIG. 5, the longitudinal acceleration and deceleration $\alpha x$ is read at first in the step S0. Subsequently, the step S1 determines whether or not $\alpha x \geq \alpha s_1$ (positive predetermined value) is fulfilled. In the case of $\alpha x \geq \alpha s_1$ (positive predetermined value) ("Yes" in the step S1), the step S2 derives $Kt = Kt_{0x}Kt_1$, $Kd = Kd_0 x Kd_1$ and $Ki = Ki_0 x Ki_1$ and the processing proceeds to the step S3. In the case where $\alpha x \geq \alpha s_1$ (positive predetermined value) is not fulfilled ("No" in the step S1), the processing proceeds to the step S4. The step S3 determines whether or not predetermined time has lapsed. In the case where the predetermined time has lapsed ("Yes" in the step S3), the processing proceeds to the step S4. In the case where the predetermined time has not lapsed, the processing proceeds to the step S5. The step S4 derives $Kt = Kt_0$, $Kd = Kd_0$ and $Ki = Ki_0$ and the processing proceeds to the step S5.

As for the step S5, the motor rotation angle signal $\theta$ detected by the position detection circuit 53 is read. Subsequently, the step S6 differentiates the motor rotation angle signal $\theta$ to calculate the motor angular velocity $\omega m$. Subsequently, the step S7 differentiates the motor angular velocity $\omega m$ to calculate the motor angular acceleration $\alpha m$.

Subsequently, in the step S8, the steering torque T and the steering assist command value I are read. Subsequently, in the step S9, likewise the torque differentiation compensation unit 71, the differentiation value T' of the steering torque T is multiplied by the torque differentiation gain Kt calculated in the step S2 or the step S4 to conduct arithmetic operation on the differentiation compensation value Id. Subsequently, in the step S10, likewise the convergence compensation unit 76, the motor angular velocity $\omega m$ is multiplied by the convergence gain Kd calculated in the step S2 or the step S4 to conduct arithmetic operation on the convergence compensation value Id. Subsequently, in the step S11, likewise the inertia compensation unit 77, the motor angular acceleration $\alpha m$ is multiplied by the inertia compensation gain Ki calculated in the step S2 or the step S4 to calculate the inertia compensation value Ii.

Subsequently, the step S12 calculates the self-aligning torque value SAT according to the above described equation (2). Subsequently, in the step S13, to the steering assist command value I are added the respective compensation values It, Id and Ii and the self-aligning torque value SAT calculated in the step S9 to S12 to calculate the torque command value Tref.

Thereby, in the case where longitudinal acceleration $\alpha x$ of a vehicle is not less than $\alpha s_1$ (positive predetermined value), that is, at the time of acceleration and startup ($\alpha x$ is large), torque differentiation gain Kt increases more than the amount at the time of normal controlling to, therefore, cause the torque differentiation compensation value to increase in the torque differentiation compensation unit 71; in addition, convergence gain Kd increases more than the amount at the time of normal controlling to, therefore, cause the convergence compensation value in the convergence compensation unit 76; and the inertia compensation gain Ki decreases less than the amount at the time of normal controlling to, therefore, cause the inertia compensation value to decrease in the inertia compensation unit 77 to enable effective suppression on the torque steer.

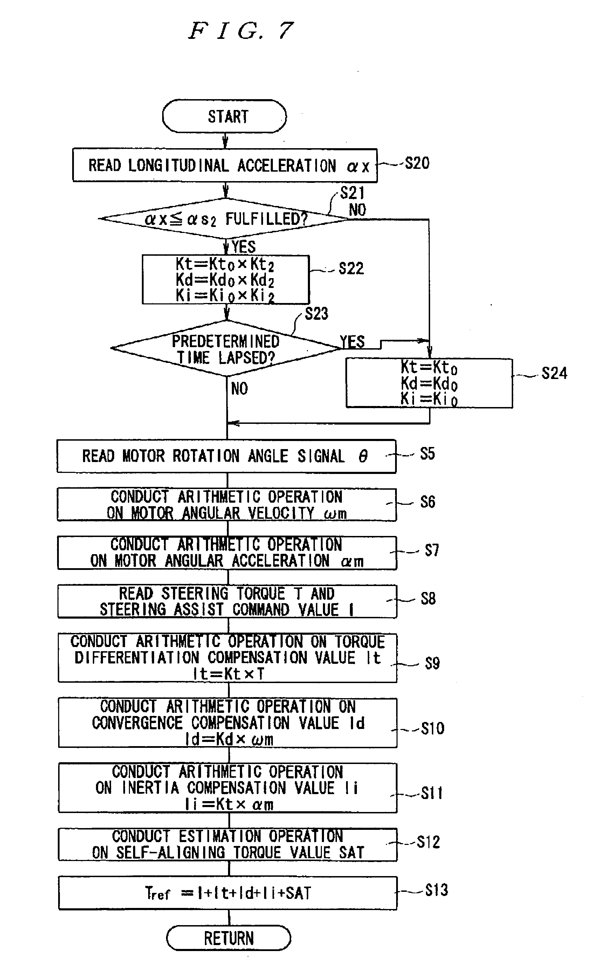

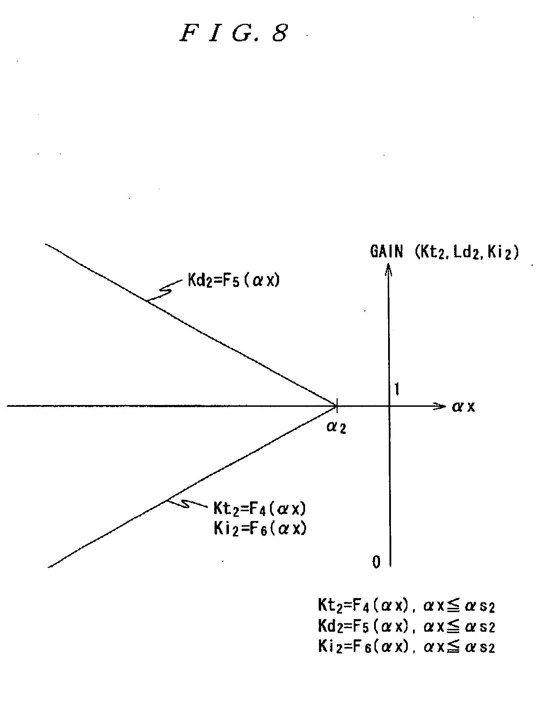

An operation example 2 of the above configured MCU 4 will be described with reference to FIG. 7 and FIG. 8. FIG. 7 is a flow chart for describing an operation example 2 of the compare unit 73. FIG. 8 is a drawing illustrating a function on torque differentiation correction gain $Kt_2$, convergence correction gain $Kd_2$ and inertia compensation correction gain $Ki_2$. For this operation example 2, suppression controlling on vehicle instability during braking will be described.

As described above, at the time of braking, vehicle instability during braking occurs at the time of sudden braking, causing a large change in braking force due to unbalance of braking force to be transmitted and force from various directions to a tire and suspension. In that case, force is applied from various directions to the tire and the suspension to generate force to try to twist the steering shaft 2 from the opposite side of the steering. In particular, at the time of steering retaining, the steering retaining force becomes load so that the force to be twisted from the tire and the suspension side is transmitted through the tie rod 6, the rack pinion mechanism 5 and the steering shaft 2.

However, the torque sensor 10 detects torque corresponding to this force and the steering assist motor 20 is driven based on this detected torque and is assisted in the direction of alleviating the twist force from the tire and suspension side. That is, the assist of the electric power steering apparatus will possibly promote the vehicle instability during braking.

Therefore, in the operation example 2, differentiation compensation control on the torque differentiation compensation unit 71 of the feedforward system is used for suppressing the vehicle instability during braking to reduce that compensation amount more than the amount at the time of normal controlling and, thereby, to delay the assist and reduce the assist amount immediately so as to alleviate the vehicle instability during braking.

In addition, in the operation example 2, the convergence compensation control of the convergence compensation unit 76 is used for suppressing the vehicle instability during braking, and that compensation amount is increased than the amount at the time of the normal controlling to cause the steering shaft 2 to be hardly apt to move against the reverse input torque to alleviate the vehicle instability during braking.

In addition, in the operation example 2, the inertia compensation control of the inertia compensation unit 77 is used for suppressing the vehicle drift at the time of braking, and that compensation amount is decreased than the amount at the time of the normal controlling to cause response of the steering assist motor 20 to delay to cause the steering shaft 2 to be hardly apt to move against the reverse input torque to alleviate the vehicle instability during braking at the time of braking.

In FIG. 7, reference characters Kt denote a torque differentiation gain; reference characters Kd denote a convergence gain; reference characters Ki denote an inertia compensation gain; reference characters and numeral $Kt_0$ denote a torque differentiation gain at the time of normal controlling; reference characters and numeral $Kd_0$ denote a convergence gain at the time of normal controlling; reference characters and numeral $Ki_0$ denote an inertia compensation gain at the time of normal controlling; reference characters and numeral $Kt_2$ denote a torque differentiation correction gain, reference characters and numeral $Kd_2$ denote a convergence correction gain; reference characters and numeral $Ki_2$ denote an inertia compensation correction gain; reference characters $\alpha x$ denote a longitudinal acceleration of a vehicle subjected to vehicle speed differentiation; and reference characters and numeral $\alpha s_2$ denote a negative predetermined value.

FIG. 8 illustrates an equation on the above described torque differentiation correction gain $Kt_2$, the above described convergence correction gain $Kd_2$ and the above described inertia compensation correction gain $Ki_2$, where abscissae represent longitudinal acceleration $\alpha x$ of a vehicle and ordinates represent gain. In the drawing, the case of $\alpha x \geq \alpha s_2$ establishes the torque differentiation correction gain $Kt_2 = F_4(\alpha x)$, the convergence correction gain $Kd_2 = F_5(\alpha x)$ and the above described inertia compensation correction gain $Ki_2 = F_6(\alpha x)$. The torque differentiation correction gain $Kt_2$ and the inertia compensation correction gain $Ki_2$ get smaller as $\alpha x$ gets smaller. On the other hand, the convergence correction gain $Kd_2$ gets larger as $\alpha x$ gets smaller. Here, in the drawing, $F_4(\alpha x)$, $F_5(\alpha x)$ and $F_6(\alpha x)$ are linear functions but can be nonlinear functions. In addition, for the torque differentiation correction gain $Kt_2$, the above described convergence correction gain $Kd_2$ and the above described inertia compensation correction gain $Ki_2$, the negative predetermined value $\alpha s_2$ is commonly used, but different values can be used respectively.

In the compensation control processing shown in FIG. 7, corresponding to the compensation control processing in FIG. 5, in the step S20, the longitudinal acceleration ax is read and subsequently, in the step S21 it is determined whether $\alpha x \leq \alpha s_2$ is established. When the determination result is $\alpha x \leq \alpha s_2$ ("Yes" in the step S21), the processing proceeds to the step S22, $Kt=Kt_0 \times Kt_2$, and $Kd=Kd_0 \times Kd_2$, $Ki=Ki_0 \times Ki_2$ are establish, and subsequently the processing proceeds to the step S23. On the other hand, in the case where it is not $\alpha x \leq \alpha s_2$ ("No" in the step S21), the processing proceeds to the step S24. In the step S23, whether or not a predetermined time has lapsed is determined. In the case where a predetermined item has not lapsed ("No" in the step S23), the processing proceeds to the step S5 in FIG. 5, while in the case where a predetermined time has lapsed ("Yes" in the step S23), the processing proceeds to the step 24. In the step S24, $Kt=Kt_0$, $Kd=Kd_0$ and $Ki=Ki_0$ are established and subsequently the processing proceeds to the step S5 in FIG. 5 in which the processing similar to that in FIG. 5 is performed.

Thereby, in the case where longitudinal acceleration $\alpha x$ of a vehicle is not more than the negative predetermined value $\alpha s_2$, that is, at the time of sudden braking, torque differentiation gain Kt decreases less than the amount at the time of normal braking to, therefore, cause the torque differentiation compensation value (compensation amount) to decrease in the torque differentiation compensation unit 71; in addition, convergence gain Kd increases more than the amount at the time of normal controlling to, therefore, cause the convergence compensation value (compensation amount) to increase in the convergence compensation unit 76; and the inertia compensation gain Ki decreases more than the amount at the time of normal controlling to, therefore, cause the inertia compensation value (compensation amount) to decrease in the inertia compensation unit 77 to enable effective suppression on the vehicle instability during braking.

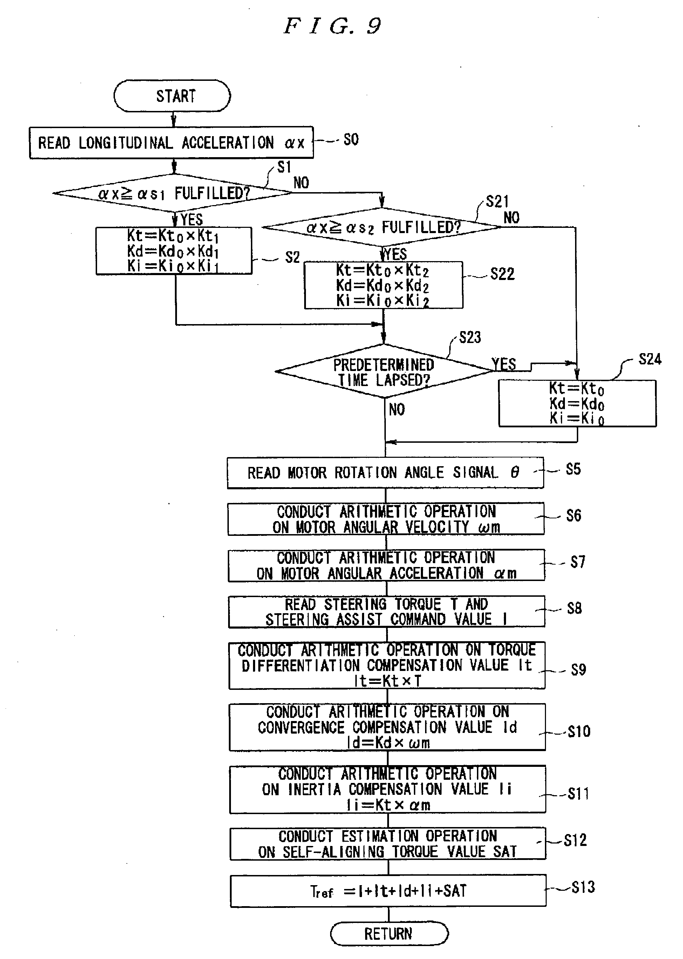

Here, the operation example 1 and the operation example 2 can be conducted in a combined manner. FIG. 9 is a flow chart for describing an operation in the case of combining the operation example 1 and the operation example 2. In FIG. 9, the same step numerals designate the steps conducting like processing in FIG. 5 and FIG. 7.

As described above, according to the first embodiment, the compensation control unit 70 is designed to conduct compensation control for compensating the steering property and determine the correction amount of the compensation control based on the longitudinal acceleration $\alpha x$ of a vehicle to, therefore, enable alleviation on torque steer and vehicle instability during braking. In addition, the unit of the electric power steering apparatus can singly alleviate torque steer and vehicle instability during braking; requires no collaborative control with another unit and, therefore, is simple and can reduce development man-hour. In addition, there is no need to provide any complicated unit additionally such as a wheel speed sensor and a drive force sensor and, therefore, inexpensive configuration can be adopted.

In addition, according to the first embodiment, the compensation control unit 70 is designed to switch the control contents of compensation controlling based on the symbol of the longitudinal acceleration $\alpha x$ of a vehicle to, therefore, enable alleviation of torque steer in the case where the longitudinal acceleration of a vehicle is positive and alleviation of vehicle instability during braking in the case where the longitudinal acceleration of a vehicle is negative.

In addition, according to the first embodiment, compensation controlling includes torque differentiation compensation control suppressing variation of steering force, convergence compensation control controlling in the direction of preventing steering wheel rotation and inertia compensation control controlling in the direction of assisting steering wheel rotation. The compensation control unit 70 is designed to change compensation amount of torque differentiation compensation control, convergence compensation control and inertia compensation control based on the longitudinal acceleration $\alpha x$ of a vehicle; torque steer and instability during braking can be suppressed with a plurality of compensation controls for compensating steering property so as to enable more effective alleviation on torque steer and vehicle instability during braking.

In addition, according to the first embodiment, in the case of the longitudinal acceleration $\alpha x$ of a vehicle being not less than the positive predetermined value $\alpha s_1$, the compensation control unit 70 is designed to increase the compensation amount of torque differentiation compensation control more than the amount at the time of normal controlling, increase the above described compensation amount of convergence compensation control more than the amount at the time of normal controlling and decrease the compensation amount of inertia compensation control less than the amount at the time of normal controlling. Therefore, the torque differentiation compensation control can eliminate the delay in assisting. The convergence control is made to be hardly apt to move the steering shaft against the reverse input torque. The inertia compensation control delays responsiveness of the steering assist motor 20 to make the steering shaft be hardly apt to move against the reverse input torque and, thereby, torque steer can be alleviated.

In addition, according to the first embodiment, in the case of the longitudinal acceleration of a vehicle being not more than the negative predetermined value $\alpha s_2$, the compensation control unit 70 is designed to decrease the compensation amount of torque differentiation compensation control less than the amount at the time of normal controlling, increase the compensation amount of convergence compensation control more than the amount at the time of normal controlling and decrease the compensation amount of inertia compensation control less than the amount at the time of normal controlling. Therefore, the torque differentiation compensation control delays assisting to reduce the assist amount immediately. The convergence compensation control makes the steering shaft be hardly apt to move against the reverse input torque. The inertia compensation control delays responsiveness of the steering assist motor 20 to make the steering shaft be hardly apt to move against the reverse input torque and, thereby, vehicle instability during braking can be alleviated.

In addition, according to the first embodiment, the case of the longitudinal acceleration of a vehicle being $\alpha x \geq \alpha s_1$ (positive predetermined value) establishes the torque differentiation correction gain $Kt_1 = F_1(\alpha x)$, the convergence correction gain $Kd_1 = F_2(\alpha x)$ and the inertia compensation correction gain $Ki_1 = F_3(\alpha x)$ and the case of the longitudinal acceleration of the vehicle being $\alpha x \leq \alpha s_2$ (negative predetermined value) establishes the torque differentiation correction gain $Kt_2 = F_4(\alpha x)$, the convergence correction gain $Kd_2 = F_5(\alpha x)$ and the inertia compensation correction gain $Ki_2 = F_6(\alpha x)$ and the correction amount is made variable according to the longitudinal acceleration $\alpha x$ of a vehicle so as to adopt comparatively small correction amount in the case of the longitudinal acceleration $\alpha x$ of a vehicle being small to enable, therefore, reduction in influence to a normal steering.

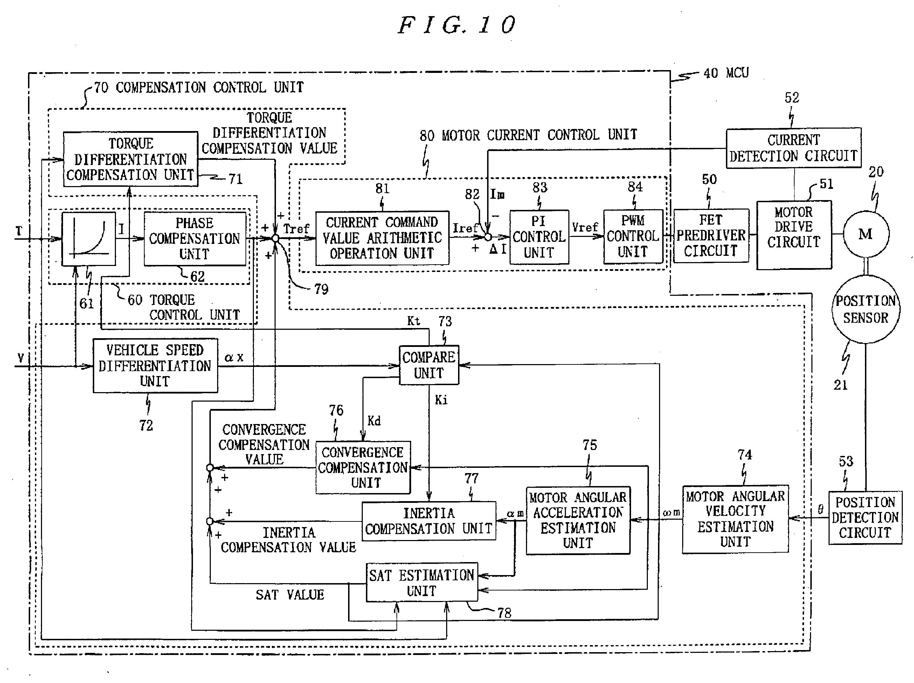

Next, a second embodiment of the present invention will be described with reference to FIG. 10 to FIG. 12.

For the above described first embodiment, the positive predetermined value $\alpha s_1$ and the negative predetermined value $\alpha s_2$ which the compare unit 73 uses are intrinsic values. In the second embodiment, the positive predetermined value $\alpha s_1$ and the negative predetermined value $\alpha s_2$ are variable.

FIG. 10 is a functional configuration diagram of an MCU 40 related to the second embodiment and is a drawing illustrating a configuration in the case where the positive predetermined value $\alpha s_1$ and the negative predetermined value $\alpha s_2$ are variable according to the SAT value. In FIG. 10, like reference characters designate the same or similar functions in the respective sites in FIG. 3 and description on the common portions will be omitted.

In FIG. 10, the SAT estimating unit 78 outputs the estimated SAT value to the compare unit 73. The compare unit 73 comprises a map illustrating relation between the SAT value and the positive predetermined value $\alpha s_1$ and negative predetermined value $\alpha s_2$; determines the positive predetermined value $\alpha s_1$ and the negative predetermined value $\alpha s_2$ based on the SAT value being input from the SAT estimating unit 78; compares the longitudinal acceleration $\alpha x$ of a vehicle with the positive predetermined value $\alpha s_1$ determined and the negative predetermined value $\alpha s_2$ determined; calculates to output torque differentiation gain K of the torque differentiation compensation unit 71, convergence gain Kd of the convergence compensation unit 76 and inertia compensation gain Ki of the inertia compensation unit 77 respectively to the torque differentiation compensation unit 71, the convergence compensation unit 76 and inertia compensation unit 77.

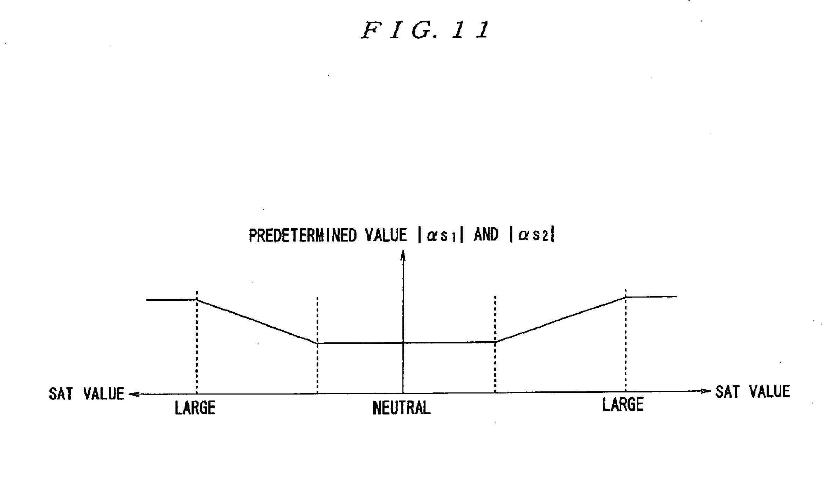

FIG. 11 is a diagram illustrating an example of a map illustrating relation between a SAT value and the positive predetermined value $\alpha s_1$ and the negative predetermined value $\alpha s_2$. In the drawing, $|\alpha s_1| = |\alpha s_2|$ is given, where abscissae represent the SAT value and ordinates represent the absolute values of the predetermined values $\alpha s_1$, and $\alpha s_2$. Here, $|\alpha s_1| = |\alpha s_2|$ is given but $|\alpha s_1| \neq |\alpha s_2|$ can be given.

In FIG. 11, in the case where the SAT value is large, the absolute values ($|\alpha s_1|$ and $|\alpha s_2|$) are set larger than the values in the case where the SAT value is small. Accordingly, suppression control on torque steer and instability during braking will act more strongly in the case where the SAT value is small (see FIG. 6 and FIG. 8). Thereby, during straight acceleration desired to activate suppression control on torque steer and vehicle instability during braking and during straight travel braking, suppression control on torque steer and vehicle instability during braking will act more strongly to enable effective alleviation on torque steer and vehicle instability during braking. In addition, during normal steering, suppression control on torque steer and vehicle instability during braking will act weakly to enable suppression on change in steering performance due to intervention of suppression control on torque steer and vehicle instability during braking. Here, the SAT value is estimated. However, the SAT value will not be limited to an estimate but can be a measurement detection value with a sensor and the like.

Here, in the case where grip of tires and the ground plane is secured to a certain extent, the steering angle detection value correlates to the SAT value as vehicle driving characteristics and, therefore, the steering angle detection value can be adopted instead of the SAT detection value.

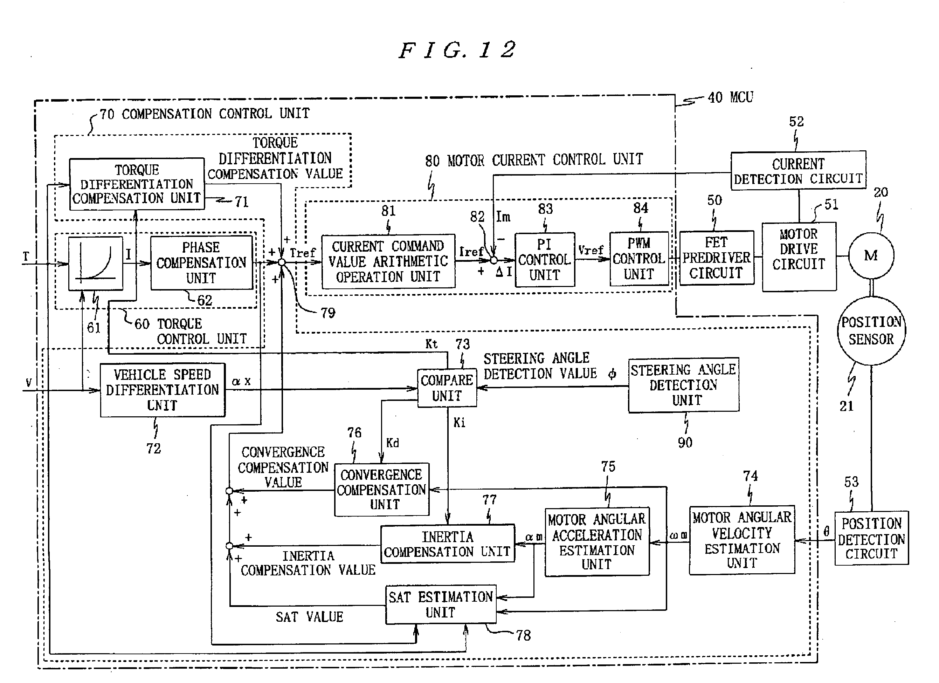

FIG. 12 is a functional configuration diagram of an MCU 40 related to the second embodiment and is a diagram illustrating a configuration in the case where the positive predetermined value $\alpha s_1$ and the negative predetermined value $\alpha s_2$ are variable according to steering angle detection value. In FIG. 12, like reference characters designate the same or similar functions in the respective sites in FIG. 3 and description on the common portions will be omitted.

In FIG. 12, the steering angle detecting unit 90 outputs the detected steering angle detection value to the compare unit 73. The compare unit 73 comprises a map illustrating relation between the steering angle detection value and the positive predetermined value $\alpha s_1$ and negative predetermined value $\alpha s_2$; determines the positive predetermined value $\alpha s_1$ and the negative predetermined value $\alpha s_2$ based on the steering angle detection value being input from the steering angle detecting unit 90; compares the longitudinal acceleration $\alpha x$ of a vehicle with the positive predetermined value $\alpha s_1$ and the negative predetermined value $\alpha s_2$ determined; calculates to output torque differentiation gain K of the torque differentiation compensation unit 71, convergence gain Kd of the convergence compensation unit 76 and inertia compensation gain Ki of the inertia compensation unit 77 respectively to the torque differentiation compensation unit 71, the convergence compensation unit 76 and inertia compensation unit 77.

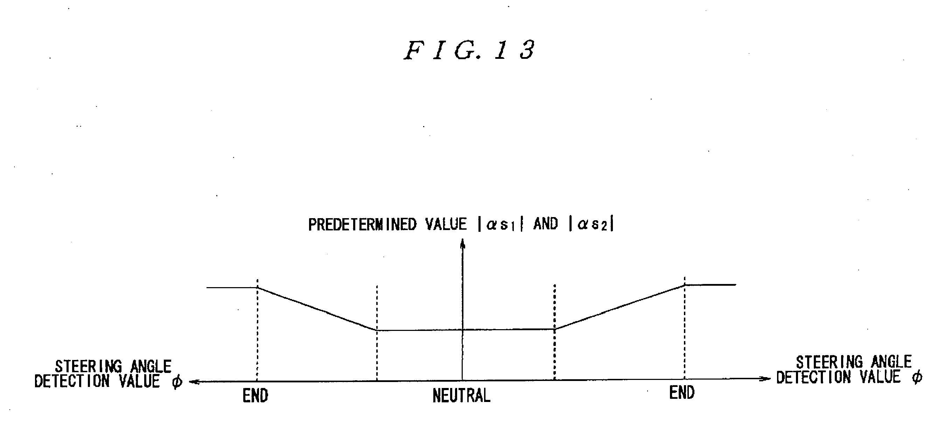

FIG. 13 is a diagram illustrating an example of a map illustrating relation between a steering angle detection value $\phi$ and positive predetermined value $\alpha s_1$ and a negative predetermined value $\alpha s_2$. In the drawing, $|\alpha s_1| = |\alpha s_2|$ is

given, where abscissae represent the steering angle detection value and ordinates represent the predetermined values of $\alpha s_1$ and $as_2$. Here, $|\alpha s_1| = |\alpha s_2|$ is given but $|as_1| \neq |as_2|$ can be given.

According to the second embodiment, compensation control unit 70 changes the predetermined value $\alpha s_1$ and $\alpha s_2$ based on the SAT (self-aligning torque) value or the steering angle detection value $\phi$. Therefore, during straight acceleration desired to activate suppression control on torque steer and vehicle instability during braking and during straight travel braking, suppression control on torque steer and vehicle instability during braking will act more strongly to enable effective alleviation on torque steer and vehicle instability during braking. In addition, during normal steering, suppression control on torque steer and vehicle instability during braking will act weakly to enable suppression on change in steering performance due to intervention of suppression control on torque steer and vehicle instability during braking.

Here, in the above described first and second embodiments, the case of changing the torque differentiation gain kt, the convergence gain kd and the inertia compensation gain ki of the torque differentiation compensation unit 71, the convergence compensation unit 76 and the inertia compensation unit 77, with the compensation control unit 70 based on the longitudinal acceleration $\alpha x$ was described. However, the present invention will not be limited thereto but any one or two of the torque differentiation gain kt, the convergence gain kd and the inertia compensation gain ki can be changed based on the longitudinal acceleration $\alpha x$.

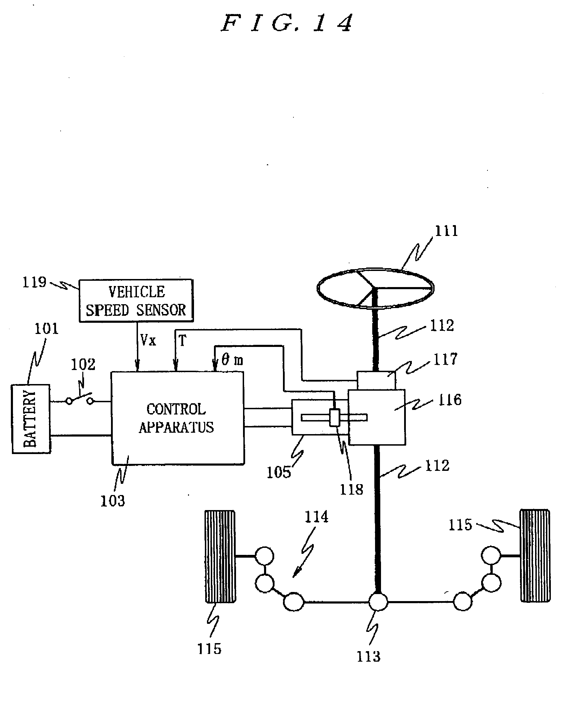

Next, a third embodiment of the present invention will be described with reference to FIG. 14 to FIG. 18.

For the above described third embodiment, a steering assist current command value Iref is corrected based on the self-aligning torque estimation value SAT and longitudinal acceleration $\alpha x$.

FIG. 14 is a holistic configuration diagram illustrating the third embodiment in the case of applying the present invention to a front engine front drive (FF) vehicle. In the drawing, reference numeral 101 denotes a battery mounted on a normal vehicle. A battery voltage Vb being output from this battery 101 is input to a control apparatus 103 as steering assist force control means through a fuse 102. This control apparatus 103 drives and controls the electric motor 105 generating steering assist force for a steering system.

Here, the electric motor 105 is configured, for example, by a brushless motor being driven with three-phase alternate current to operate as a steering assist motor generating steering assist force for the steering apparatus 110.

The steering apparatus 110 configuring the steering system has a steering shaft 112 where a steering wheel 111 is mounted; this steering shaft 112 is linked to a steering gear mechanism 113 in a rack pinion form, for example; and this steering gear mechanism 113 is linked to left and right steering control wheels 115 to which drive force from an engine (not illustrated in the drawing) is transmitted through a connection mechanism 114 such as a tie rod.

In addition, an electric motor 105 is linked to the steering shaft 112 through a reduction gear mechanism 116 configured, for example, by a worm gear. Steering assist force generated in this electric motor 105 is transmitted to the steering shaft 112 through the reduction gear mechanism 116.

In addition, a steering torque sensor 117 for detecting steering torque T being input to the steering wheel 111 is arranged in the steering shaft 112; a rotation angle sensor 118 for detecting the motor rotary angle $\theta m$ is arranged in the electric motor 105; and the steering torque T detected by the steering torque sensor 117 and the motor rotary angle $\theta m$ detected by the rotary angle sensor 118 is input to the control apparatus 103.

Here, the steering torque sensor 117 is given to the steering wheel 111 to detect steering torque transmitted to the steering shaft 112 and is configured for example, to convert steering torque to twist angle displacement of a torsion bar inserted between an input shaft and an output shaft not illustrated in the drawing, to detect this twist angle displacement with magnetic signals and to convert it into an electric signal.

Moreover, the vehicle speed Vx detected by a vehicle speed sensor 119 detecting the vehicle speed Vx of a vehicle is input to the control apparatus 103.

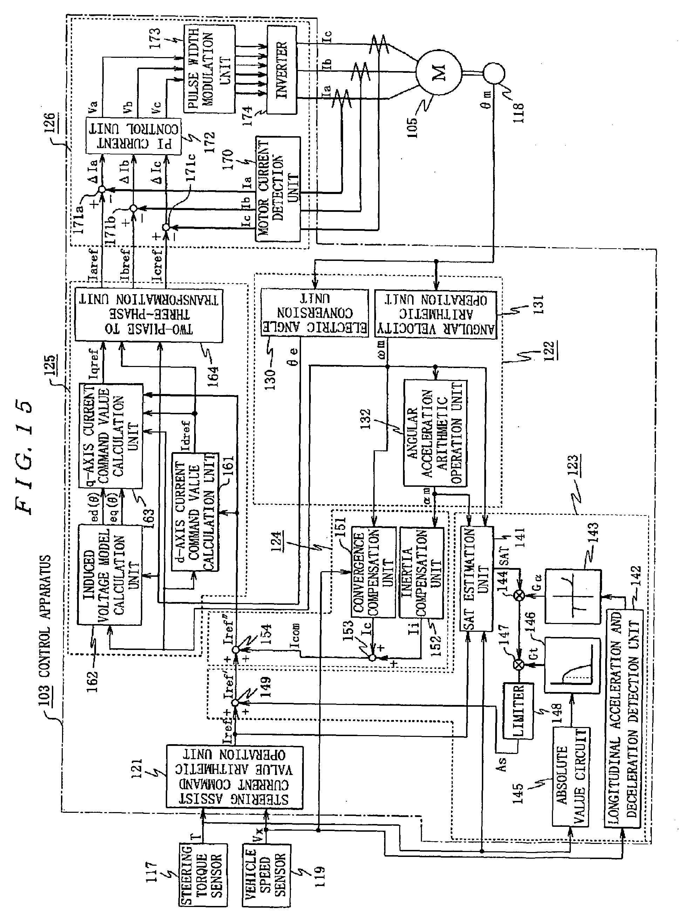

As illustrated in FIG. 15, the control apparatus 103 is configure by a current command value arithmetic operation unit 121 computing a steering assist current command value Iref as a current command value based on the steering torque T and the vehicle speed V, a motor rotation information arithmetic operation unit 122 calculating electric angle $\theta e$, motor angular velocity $\omega m$ and motor angular acceleration $\alpha m$ based on the motor rotation angle $\theta m$ detected by the rotary angle sensor 118 of the electric motor 105, a steering assist force correction unit 123 as steering assist force correcting means correcting the steering assist current command value Iref calculated by the current command value arithmetic operation unit 121 so as to suppress unstable behavior of a vehicle occurring at acceleration and deceleration to calculate the steering assist current correction value Iref', a command value compensation unit 124 compensating steering assist current correction value Iref' being output from this steering assist force correction unit 123, a d-q axis current command value arithmetic operation unit 125 calculating d-q axis current command value based on post compensation current command value Iref" compensated by this command value compensation unit 124 to convert the calculated d-q axis current command value to undergo two-phase/three-phase transformation to calculate three-phase current command value Iaref, Ibref and Icref and a motor current control unit 126 forming to output motor currents Iu to Iw driving and controlling the electric motor 105 based on the three-phase current command values Iaref, Ibref and Icref calculated by this d-q axis current command value arithmetic operation unit 125.

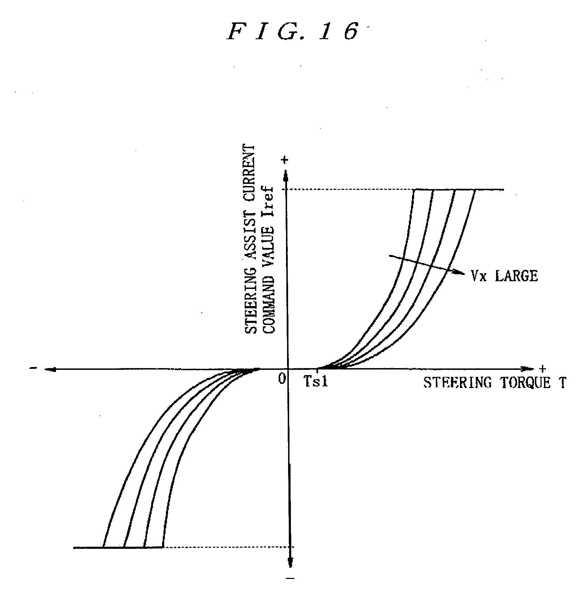

The steering assist current command value arithmetic operation unit 121 calculates the steering assist current command value Iref with reference to the steering assist current command value calculation map illustrated in FIG. 16 based on steering torque T and the vehicle speed Vx.

As illustrated in FIG. 16, this steering assist current command value calculation map is configured by a characteristic line diagram, where abscissae represent the steering torque T and ordinates represent the steering assist current command value Iref, and which is expressed by a paraholic curb with the vehicle speed Vx as parameter and is set so that the steering assist current command value Iref continues to be "0" during the steering torque T being from "0" to a set value Ts1 in its vicinity; the steering assist current command value Iref increases comparatively gradually at first for an increase in the steering torque T when the steering torque T exceeds the set value Ts1; and, when the steering torque T increases further, the steering assist current command value Iref increases steeply for that increase and is set so that inclination of this characteristic curb becomes smaller according to an increase in vehicle speed.

The motor rotation information arithmetic operation unit 122 comprises an electric angle conversion unit 130 converting the motor rotation angle $\theta m$ detected by the rotation angle sensor 118 into an electric angle $\theta e$, a angular velocity arithmetic operation unit 131 differentiating the motor rotation angle $\theta m$ detected by the rotation angle sensor 118 to calculate the motor angular velocity $\omega m$ and an angular acceleration arithmetic operation unit 132 differentiating the motor angular velocity $\omega m$ calculated by this angular velocity arithmetic operation unit 131 to calculate the motor angular acceleration $\alpha m$.

The steering assist force correction unit 123 comprises a self-aligning torque estimation unit (hereafter to be referred to as SAT estimating unit) 141 as self-aligning torque detecting means, a longitudinal acceleration and deceleration detection unit 142 as longitudinal acceleration and deceleration detection means, an acceleration and deceleration correction gain calculation unit 143, a multiplier 144, an absolute value circuit 145 calculating an absolute value of the steering torque T detected by the steering torque sensor 117, a steering torque correction gain calculation unit 146, a multiplier 147, a limiter 148 and an adder 149.

The SAT estimating unit 141 conducts the above described arithmetic operation (2) likewise the above described first embodiment and, thereby, estimates the self-aligning torque SAT being input to the steering control wheel 115. Here, in the above described equation (2), the assist torque Tm is proportionate to the steering assist current command value Iref and, therefore, the steering assist current command value Iref is applied instead of the assist torque Tm.

The longitudinal acceleration and acceleration detection unit 142 differentiates the vehicle speed Vx detected by the vehicle speed sensor 119 to calculate the longitudinal acceleration and deceleration $\alpha x$ in the vehicle longitudinal direction.

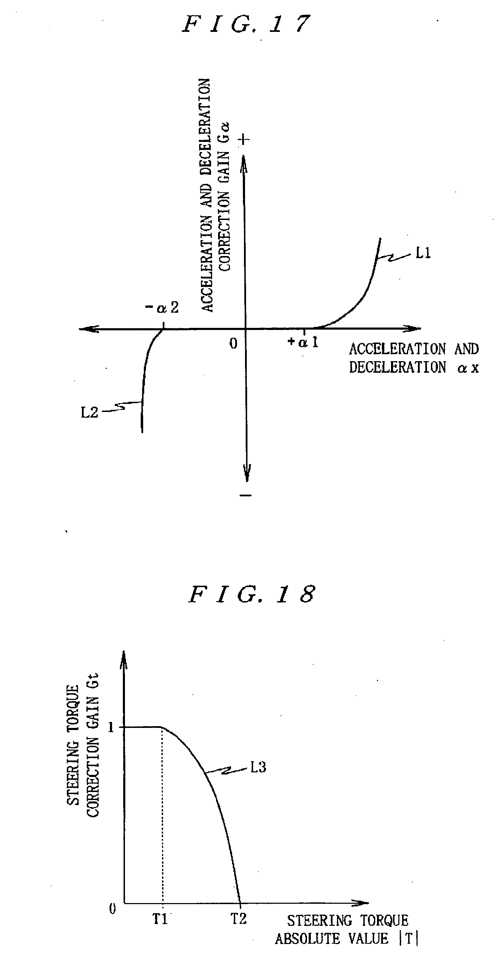

The acceleration and deceleration correction gain calculation unit 143 calculates acceleration and deceleration correction gain $G\alpha$ based on longitudinal acceleration and deceleration $\alpha x$ detected by the longitudinal acceleration and deceleration detection unit 142 with reference to an acceleration and deceleration correction gain calculation map illustrated in FIG. 17 and supplies the calculated acceleration and deceleration correction gain $G\alpha$ to the multiplier 144 where the self-aligning torque SAT is input from the SAT estimating unit 141.

As illustrated in FIG. 17, in this acceleration and deceleration correction gain calculation map, the acceleration and deceleration correction gain $G\alpha$ continues to be "0" during the longitudinal acceleration and deceleration $\alpha x$ being from 0 to the positive predetermined value $+\alpha1$ expressing acceleration and the acceleration and deceleration correction gain $G\alpha$ increases according to the characteristics line L1 as longitudinal acceleration and deceleration $\alpha x$ increases when the longitudinal acceleration and deceleration $\alpha x$ exceeds the predetermined value $+\alpha1$. On the contrary, in the setting, the acceleration and deceleration correction gain $G\alpha$ continues to be "0" during the longitudinal acceleration and deceleration $\alpha x$ being from 0 to a negative predetermined value $-\alpha2$ expressing deceleration; and the acceleration and deceleration correction gain $G\alpha$ increases steely in the negative direction according to the characteristic line L2 as the negative value of the longitudinal acceleration and deceleration $\alpha x$ increases when the longitudinal acceleration and deceleration $\alpha x$ exceeds the predetermined value $-\alpha2$. Here, the characteristic curb L1 is set to values corresponding to the phenomena where the steering wheel gets uncontrolled at acceleration when variation in drive force gets large and the vehicle speed variation gets large and at startup due to unbalance of drive force transmitted to the steering control wheels, that is, so-called torque steer during acceleration and the characteristic curb L2 is set to values generating torque from the side of the steering control wheels 115 of the steering mechanism 110 to try to twist the steering shaft 12 due to unbalance in brake force transmitted to the wheels and application of force from various directions to the tires and suspensions at deceleration and allowing suppression on the phenomena causing vehicle deflection disturbing the traveling course at sudden braking when variation in brake force is large and vehicle deceleration is large, that is, vehicle instability during braking. Here, in FIG. 17, the case of setting different characteristic curbs L1 and L2 according to the torque steer during acceleration and vehicle drift during deceleration for the case where the acceleration and deceleration $\alpha x$ represents acceleration and the case where the acceleration and deceleration $\alpha x$ represents deceleration was described. However, the present invention will not be limited thereto but the same characteristic curb can be applied for the case where the acceleration and deceleration $\alpha x$ represents acceleration and the case where the acceleration and deceleration $\alpha x$ represents deceleration.

The steering torque correction gain calculation unit 146 calculates the steering torque correction gain Gt based on the absolute value |T| of the steering torque T being input from the absolute value circuit 145 with reference to the steering torque correction gain calculation map illustrated in FIG. 18 to supply this steering torque correction gain Gt to the multiplier 147 to which a multiply output of the multiplier 144 is input. In this steering angle correction gain calculation map, as illustrated in FIG. 18, the characteristic line L3 is set so that the steering torque correction gain Gt is set to "1" during the absolute value |T| of the steering torque between "0" and a predetermined value T1 and the steering torque correction gain Gt decreases comparatively steeply corresponding to an increase in the absolute value |T| of the steering torque T when the absolute value |T| of the steering torque T exceeds the predetermined value T1 and becomes "0" regardless of an increase in the steering torque absolute value |T| when the absolute value |T| of the steering torque T reaches a predetermined value T2.

The limiter 148 limits the multiply output being output from the multiplier 147 so as to fall within a predetermined range between the maximum positive and negative values to calculate the steering assist force correction value As. The steering assist force correction value As being output from this limiter 148 is supplied to the adder 149 connected to the output side of the steering assist command value arithmetic operation unit 121 which corrects the steering assist current command value Iref to calculate the steering assist current correction value Iref'.

The command value compensation unit 124 includes at least a convergence compensation unit 151 compensating convergence of yaw rate based on the motor angular velocity ωm calculated by the angular velocity arithmetic operation unit 131 and a inertia compensation unit 152 preventing deterioration in inertia feeling or control responsiveness by compensating the portion equivalent to torque generated by inertia of the electric motor 105 based on the motor angular acceleration αm calculated by the angular acceleration arithmetic operation unit 132.

Here, the vehicle speed Vx detected by the vehicle speed sensor 119 and motor angular velocity ωm calculated by the angular velocity arithmetic operation unit 131 are input to the convergence compensation unit 151, which multiplies the motor angular velocity ωm with the convergence control gain Kv changed corresponding to the vehicle speed Vx so as to brake against the motion swinging the steering wheel 101 in order to improve convergence of yaw of a vehicle to calculate the convergence compensation value Ic.

The inertia compensation value Ii calculated by the inertia compensation unit 152 and the convergence compensation value Ic calculated by the convergence compensation unit 151 are summed by the adder 153 to calculate the command compensation value Icom. This command compensation value icom is added to the steering assist current correction value Iref' being output from the steering assist force correction unit 123 by the adder 154 to calculate the post compensation current command value Iref'' and this post compensation current command value Iref'' is output to the d-q axis current command value arithmetic operation unit 125.

In addition, the d-q axis current command value arithmetic operation unit 125 comprises a d-axis target current calculation unit 161 calculating the d-axis target current Idref based on the post compensation steering assist current command value Iref'' and the motor angular velocity ωm and a induced voltage model calculation unit 162 calculating d-axis EMF component ed(θ) of the d-q axis induced voltage model EMF(Electro Magnetic Force) and the q-axis EMF component eq(θ) based on the electric angle θe and the motor angular velocity ωm being input from an electric angle converter unit 130 of the motor rotation information arithmetic operation unit 122. Moreover, the d-q axis current command value arithmetic operation unit 125 comprises a q-axis target current calculation unit 163 calculating the q-axis target current Iqref based on the d-axis EMF component ed(θ) and q-axis EMF component eq(θ) being output from the induced voltage model calculation unit 162, the d-axis target current Idref being output from the d-axis target current calculation unit 161, the post compensation steering assist current command value Iref'' and the motor angular velocity ωm and a two-phase to three-phase transformation unit 164 converting the d-axis target current Idref being output from the d-axis target current calculation unit 61 and q-axis target current Iqref being output from the q-axis target current calculation unit 163 to three-phase current command values Iaref, Ibref and Icref.

The motor current control unit 126 comprises a motor current detection unit 170 detecting the motor currents Ia, Ib and Ic supplied to the three-phase coil of the electric motor 105, subtractors 171a, 171b and 171c subtracting the motor currents Ia, Ib and Ic detected by the motor current diction unit 170 individually from the current command values Iaref, Ibref and Icref being input from the two-phase to three-phase transformation unit 164 of the d-q axis current command value arithmetic operation unit 125 to obtain current deviations ΔIa, ΔIb and ΔIc for respective phases, a current control unit 172 conducting proportional-integral control on the obtained current deviations ΔIa, ΔIb and ΔIc for respective phases to calculate the voltage command values Va, Vb and Vc, a pulse width modulation control unit 173 conducting duty arithmetic operation based on the voltage command values Va, Vb and Vc being output from this current control unit 172 to calculate duty proportion for each phase of the electric motor 5 to form an inverter control signal made of a pulse width modulation (PWM) signal and an inverter 174 forming three-phase motor currents Ia, Ib and Ic based on the inverter control signal being output from this pulse width modulation control unit 173 to output it to the electric motor 105.

Next, operations of the above described embodiment will be described. Now, suppose that a vehicle is in a halt with the steering wheel 111 in a neutral position in the state of direct traveling. In the case where the steering wheel 111 is not steered in this state, the steering torque T detected by the steering torque sensor 117 is "0" and the vehicle speed Vx is also "0". Therefore, the steering assist current command value Iref becomes "0" when the steering assist current command value arithmetic operation unit 121 makes reference to the steering assist current command value calculation map based on the steering torque T and vehicle speed Vx.

At that time, the electric motor 105 is also in a halt. Therefore, the motor angular velocity ωm and the motor angular acceleration αm being computed by the motor rotation information arithmetic unit 122 are both "0". However, in the steering assist force correction unit 123, the steering torque T becomes "0". Therefore, the steering torque correction gain Gt calculated by the steering torque correction gain calculation unit 146 becomes "1". The self-aligning torque SAT estimated by the SAT estimation unit 141 also becomes "0" and, since the vehicle is in a halt, longitudinal acceleration and deceleration αx detected by the longitudinal acceleration and deceleration detection unit 142 is also "0" and the acceleration and deceleration correction gain Gα calculated by the acceleration and deceleration correction gain calculation unit 143 also becomes "0". Therefore, the steering assist force correction value As becomes "0" and the steering assist current correction value Iref' also becomes "0".

The motor angular velocity ωm and motor angular acceleration αm is "0" in the command value compensation unit 124 as well. Therefore, convergence compensation value Ic calculated by the convergence compensation unit 151 and the inertia compensation value Ii calculated by the inertia compensation unit 152 also become "0". Consequently, the command compensation value Icom also becomes "0" and the post compensation steering assist current command value Iref" being output from the adder 154 also becomes "0".

Therefore, three-phase current command value Iaref, Ibref and Icref calculated by the d-q axis current command value arithmetic operation unit 125 becomes zero. Since the electric motor 105 is in a halt, the motor currents Ia, Ib and Ic detected by the motor current detection unit 170 also become "0". Therefore, since current deviations ΔIa, ΔIb and ΔIc being output from the subtractor 171a, 171b and 171c also become "0", the voltage command values Va, Vb and Vc being output from the current control unit 172 also become "0". Since the output of the inverter control signal from the pulse width modulation circuit 173 is stopped and the inverter 174 is in a halt, the motor currents Ia, Ib and Ic supplied to the electric motor 105 also continue to be "0" so that the electric motor 105 continue its halt state.

In this halt state of the vehicle, the steering wheel 111 is steered to conduct so-called steering at stationary condition. Accordingly, the steering torque T being detected by the steering torque sensor 117 becomes a comparatively large value. Thereby, the steering assist current command value Iref calculated by the steering assist current command value arithmetic operation unit 121 increases rapidly corresponding to the steering torque T.

At that time, in the steering assist force correction unit 123, the motor angular velocity ωm and motor angular acceleration αm are both "0" in the SAT estimation unit 141. However, since the steering assist current command value Iref is substantially equal to the assist torque Tm, the aligning torque SAT calculated by the above described equation (2) will become a summed value of the steering torque T and the steering assist current value Iref. However, since the vehicle is in a halt state and the vehicle speed Vx detected by the vehicle speed sensor 119 is "0", the longitudinal acceleration and deceleration αx detected by the longitudinal acceleration and deceleration detection unit 142 is "0". Therefore, the acceleration and deceleration correction gain Gα calculated by the acceleration and deceleration correction gain calculation unit 143 continues to be "0", the multiply output of the multiplier 144 becomes "0". Moreover, the absolute value |T| of the steering torque T becomes a large value. Therefore, the steering torque correction gain Gt also becomes a small amount so that the multiply output of the multiplier 147 becomes "0" and the steering assist force correction value As continues to be "0".

Therefore, steering assist current command value Iref calculated by the steering assist current command value arithmetic operation unit 121 is directly supplied to the adder 154 and the electric motor 105 is in a halt still in this state. Consequently, the motor angular velocity ωm and the motor angular acceleration αm also continue to be "0" so that the convergence compensation value Ic calculated by the convergence compensation unit 151 of the command value compensation unit 124 and the inertia compensation value Ii calculated by the inertia compensation unit 152 also continue to be "0" and the command compensation value Icom becomes "0".

Therefore, the steering assist current command value Iref from the adder 154 is supplied directly to the d-q axis current command value arithmetic operation unit 125. From this d-q axis current command value arithmetic operation unit 125, the three-phase current command values Iaref, Ibref and Icref corresponding to the steering assist current command value Iref are output to the motor current control unit 126.

Accordingly, three-phase current command values Iaref, Ibref and Icref are output from the subtractors 171a, 171b and 171c directly as the current deviations ΔIa, ΔIb and ΔIc. This undergoes PI control by the current control unit 172 and thereafter is converted to the voltage command values Varef, Vbref and Vcref, which are supplied to the pulse width modulation circuit 173. Thereby, the inverter control signal is output from this pulse width modulation circuit 173. This is supplied to the inverter 174 and, thereby, three-phase motor currents Ia, Ib and Ic are output from this inverter 174 so that the electric motor 105 undergoes rotary drive to generate a steering assist force corresponding to the steering torque T.

The steering assist force generated by this electric motor 105 is transmitted to the steering shaft 112 to which the steering force from the steering wheel 111 is transmitted through the reduction gear mechanism 116. Thereby, the steering force and the steering assist force are converted into straight lined motion in the side direction by the steering gear mechanism 113. The left and right steering control wheels 115 are turned through the connection mechanism 114 so that the steering control wheels 115 can be turned with light steering torque.

And, the electric motor 105 undergoes drive control and, thereby, the motor angular velocity $\omega$m and the motor angular acceleration $\alpha$m calculated by the motor rotation information arithmetic operation unit 122 increase. Thereby, the convergence compensation value Ic and the inertia compensation value Ii are calculated by the command value compensation unit 124. These are summed to calculate the command compensation value Icom, which is supplied to the adder 154 and added to the steering assist current correction value Iref' to calculate the post compensation steering assist current command value Iref". Thereby, command value compensation processing is conducted.

Thus, in the halt state of a vehicle, torque steer at acceleration occurring during acceleration will not occur. Vehicle instability during braking occurring during deceleration will not occur either. The steering assist force correction value As computed by the steering assist force correction unit 123 continues to be zero.

However, accelerating a vehicle is caused to start running, for example, in a straight running state from the halt state of the vehicle and is accelerated, the drive force changes largely and variation in vehicle speed becomes large in this accelerated state since the vehicle is a front engine front drive vehicle and due to unbalance of the drive force being transmitted to the steering control wheels so that the phenomena where the steering wheel 111 gets uncontrollable, that is, so-called torque steer during acceleration occurs.

Thus, at startup with comparatively large acceleration in a straight traveling state, torque steer occurs. The disturbance turning torque during acceleration at that time will be transmitted from the steering control wheels 115 to the steering shaft 112 as reverse input torque through a linking mechanism 114 such as a tie rod and steering gear mechanism 113.

The reverse input torque being transmitted to this steering shaft 112 tries to rotate the steering wheel 111. Therefore, when a driver retains the steering wheel 111 in order to prevent this, the steering torque sensor 117 will detect the reverse input torque. The steering assist current command value arithmetic operation unit 121 calculates a steering assist current command value Iref corresponding to the reverse input torque.

At that time, in the steering assist force correction unit 123, the steering wheel 111 is in a steering retaining state, that is, retained by the driver. The electric motor 105 will not rotate. Therefore, since the motor angular velocity $\omega$m and the motor angular acceleration $\alpha$m calculated by the motor rotation information arithmetic unit 122 continue to be "0", the value derived by adding the steering torque T detected by the steering torque sensor 117 to the steering assist current command value Iref calculated by the steering assist current command value arithmetic operation unit 121 will be estimated by SAT estimation unit 141 as the self-aligning torque SAT. Consequently, the self-aligning torque SAT estimated by the SAT estimation unit 141 is supplied to the multiplier 144. At that time, since the vehicle is in the state of acceleration, the longitudinal acceleration and deceleration $\alpha$x detected by the acceleration and deceleration detection unit 42 increases in the positive direction. In response, the acceleration and deceleration correction gain G$\alpha$ calculated by the acceleration and deceleration correction gain calculation unit 143 will increase from "0" so as to obtain a multiply output out of the multiplier 144 by multiplying the self-aligning torque SAT with the acceleration and deceleration correction gain G$\alpha$.

On the other hand, the steering torque T detected by the steering torque sensor 117 is only a portion for the reverse input torque due to torque steer and is a comparatively small value. The steering torque correction gain Gt calculated by the steering torque correction gain calculation unit 146 will become substantially "1" so that the multiply output of the multiplier 144 is directly output from the multiplier 147 and is output to the adder 149 through the limiter 148 as the steering assist force correction value As.

Therefore, the value derived by the adder 149 adding the steering assist force correction value As to the steering assist current command value Iref calculated by the steering assist current command value arithmetic operation unit 121 is supplied to the adder 154 as the steering assist current correction value Iref'.

At that time, the electric motor 105 continue its rotation halt state, the motor angular velocity $\omega$m and the motor angular acceleration $\alpha$m calculated by the motor rotation information arithmetic operation unit 122 continue to be "0". Thereby, the command compensation value Icom of the command compensation unit 124 also continues to be "0". The steering assist current correction value Iref' is supplied to the d-q axis current command value arithmetic operation unit 125 directly as the post compensation steering assist current command value Iref". This d-q axis current command value arithmetic operation unit 125 calculates the three-phase command values Iaref, Ibref and Icref causing the electric motor 105 to generate a steering assist force to set off the reverse input torque due to torque steer.

Therefore, the motor current control unit 126 outputs the motor currents Ia, Ib and Ic corresponding to the three-phase current command values Iaref, Ibref and Icref to the electric motor 105. This electric motor 105 generates a steering assist force for setting off the reverse input torque due to torque steer. This steering assist force is transmitted to the steering shaft 112 through the reduction gear mechanism 116 to set off the reverse input torque due to the torque steer during acceleration.

In addition, in the case where a vehicle starts running while steering the steering wheel 111 at comparatively large longitudinal acceleration and deceleration αx, torque steer during acceleration will occur likewise the above described case. However, the steering wheel 111 is steered to result in the state where the absolute value |T| of the steering torque T detected by the steering torque sensor 117 exceeds a predetermined value T1. Then, corresponding to an increase of the absolute value |T| of the steering torque T, the steering torque correction gain Gt calculated by the steering torque correction gain calculation unit 146 decreases to reach lower than "1". Thereby, the multiply output being output from the multiplier 147 will decrease less than that during startup at the time of straight traveling. Therefore, the steering assist force correction value As decreases so that the electric motor 105 undergoes drive control based on the steering assist current command value Iref calculated by the steering assist current command value arithmetic operation unit 121. This electric motor 105 generates a steering assist force corresponding to the steering torque T to enable light steering.

At that time, the electric motor 105 is rotated to drive. Thereby, the motor angular velocity ωm and the motor angular acceleration αm calculated by the motor rotation information arithmetic operation unit 122 will increase from "0" so that the convergence compensation unit 151 calculates the convergence compensation value Ic based on the motor angular velocity ωm and the inertia compensation unit 152 calculates the inertia compensation value Ii based on the motor angular acceleration αm. These are summed by the adder 153 and supplied to the adder 154 as the command correction value Icom and is added to the steering assist current correction value Iref' being output from the adder 149 to calculate the post compensation steering assist current command value Iref", which is supplied to the d-q axis current command value arithmetic operation unit 125. Therefore, this d-q axis current command value arithmetic operation unit 125 calculates three-phase current command values Iaref, Ibref and Icref corresponding to the post compensation current command value Iref". Based on these, the electric motor 105 undergoes drive control with the motor current control unit 126 so as to generate an optimum steering assist force.

On the other hand, in the case of a gradual startup state of a vehicle during straight traveling at comparatively small longitudinal acceleration and deceleration αx, torque steer during acceleration hardly occurs. The steering torque T detected by the steering torque sensor 117 is substantially "0". The steering assist current command value Iref calculated by the steering assist current command value arithmetic operation unit 121 will become substantially "0". In addition, since the longitudinal acceleration and deceleration αx detected by the longitudinal acceleration and deceleration detection unit 142 will be a value smaller than a predetermined value α1 in the steering assist force correction unit 123, the acceleration and deceleration correction gain Gα calculated by the acceleration and deceleration correction gain calculation unit 143 will become "0". Even if the self-aligning torque SAT being larger than "0" is output from the SAT estimation unit 141, the multiply output being output from the multiplier 144 will become "0". The steering assist force correction value As being output from the limiter 148 will also become "0" so that the three-phase current command values Iaref, Ibref and Icref being calculated by the d-q axis current command value arithmetic operation unit 125 become substantially "0". Thereby, drive on the electric motor 105 by the motor current control unit 126 is stopped.

Occurrence of the above described torque steer during acceleration is not limited to during startup but also takes place during large acceleration of the longitudinal acceleration and deceleration. During such acceleration, when the longitudinal acceleration and deceleration is a positive value expressing acceleration likewise during the above described startup, the steering assist force correction value As is calculated as described above based on the self-aligning torque SAT estimated by the SAT estimation unit 141. By correcting the steering assist current command value Iref calculated by the steering assist current command value arithmetic operation unit 21 with this steering assist force correction value As, the reverse input torque due to torque steer can be set off so that good steering characteristics are obtainable.

Moreover, in the case where a vehicle is, for example, in the state of straight traveling and in the state of braking with a comparatively large braking force, due to unbalance of the braking force transmitted to the wheels and force from various directions to tires and suspension, phenomena causing vehicle deflection disturbing the running orientation, that is, vehicle instability during braking occurs during a sudden brake with significant change in braking force and significant vehicle deceleration.

Also in that case, by making the force on pedal depressing the brake pedal larger in the state where the vehicle is traveling in the straight traveling state, when the braking apparatus provides each wheel of the vehicle with a comparatively large braking force, unbalance of the braking force transmitted to the wheels and force from various directions to tires and suspension are added to cause the vehicle to drift to one side of left or right directions, and generates torque trying to twist the steering shaft 112 from the side of the steering control wheels 115 of the steering mechanism 110. In particular, the steering retaining force will become a load during steering retaining, and the twisting torque from the side of the steering control wheels 115 and the suspension side is transmitted to the steering shaft 112 through the connection mechanism 114 such as a tie rod and the steering gear mechanism 113.

However, the steering torque sensor 117 will detect torque corresponding to the force twisting the steering shaft 112 from the side of the steering control wheels 115 to drive the electric motor 105 based on this detected torque and generate a steering assist force in the direction of alleviating the torque being transmitted from the side of the steering control wheels and the suspension. That is, the steering assist force of the electric power steering apparatus will promote the vehicle instability during braking.

Therefore, the longitudinal acceleration and deceleration detection unit 142 in the steering assist force correction unit 123 enters the state where negative acceleration and deceleration $\alpha x$ exceeding a comparatively large predetermined value $-\alpha 2$ expressing deceleration is detected to generate vehicle instability during braking and then the steering torque sensor 117 detects the twisting torque being transmitted from the side of the steering control wheels 115 to the steering shaft 112 through the connection mechanism 114 such as a tie rod and the steering gear mechanism 113. Consequently, the steering assist current command value arithmetic operation unit 121 calculates a steering assist current command value Iref setting off the twisting torque.

On the other hand, in the steering assist force correction unit 123, the longitudinal acceleration and deceleration detection unit 142 detects a negative acceleration and deceleration $\alpha x$ in excess of a comparatively large predetermined value $-\alpha 2$ expressing deceleration. Therefore, the acceleration and deceleration correction gain calculation unit 143 will calculate the acceleration and deceleration correction gain $-G\alpha$ being a negative value smaller than "0". This acceleration and deceleration correction gain $-G\alpha$ is supplied to the multiplier 144. Thereby, the multiply output of the multiplier 144 becomes $-G\alpha \times SAT$ so that the symbol of the self-aligning torque SAT is inverted.

This braking state is a steering retaining state in order to suppress vehicle instability during braking and the absolute value |T| of the steering torque T detected by the steering torque sensor 117 becomes a comparatively small value. Therefore, the steering torque correction gain Gt calculated by the steering torque correction gain calculation unit 146 also becomes a value in the vicinity of "1". This steering torque correction gain Gt is supplied to the multiplier 147. Thereby, the steering torque correction gain Gt is multiplied with the multiply output $-G\alpha \times SAT$ of the multiplier 144 so that the multiply output $-G\alpha \times Gt \times SAT$ is supplied to the limiter 148. With this limiter 148, the multiply output $-G\alpha \times Gt \times SAT$ occasionally being a value within a predetermined range is output directly and is suppressed to the positive and negative maximum values in the case of exceeding the positive and negative maximum values so as to be output as a steering assist force correction value As to the adder 149.

Therefore, the steering assist force correction value As will be subtracted from the steering assist current command value Iref calculated by the steering assist current command value arithmetic operation unit 121. The steering assist force according to the steering torque T generated by the electric motor 105 is suppressed so as not to act in the direction of promoting vehicle instability during braking, enabling suppression on the vehicle instability during braking.

For the suppression on the vehicle instability during braking occurring at this sudden braking, the steering assist force correction value As gets larger as the self-aligning torque SAT estimated by the SAT estimation unit 141 gets a larger value. As for the longitudinal acceleration and deceleration $\alpha x$ detected by the longitudinal acceleration and deceleration detection unit 142, as the absolute value with a negative value expressing deceleration gets larger, the acceleration and deceleration correction gain $G\alpha$ will become larger negative value so that the steering assist force correction value As become a large value. As vehicle instability during braking occurring at sudden braking gets larger, the steering assist force correction value As becomes larger so that the steering assist current correction value Iref' subjected to correction on the steering assist current command value Iref becomes small to enable ensured suppression on vehicle instability during braking.

Moreover, the steering torque correction gain Gt is set to "1" when the absolute value |T| of the steering torque T is in the vicinity of zero. Thereby, deceleration mainly during straight traveling with desire to suppress vehicle instability during braking can exert the suppression effect on vehicle instability during braking to the maximum limit. During steering when the steering wheel 111 is being steered, the steering assist force correction value As is suppressed to get small to suppress variation in steering performance due to suppression control intervention on vehicle instability during braking in the state of whirl running so as to enable optimum steering assist control corresponding to the status of occurrence of vehicle instability during braking.

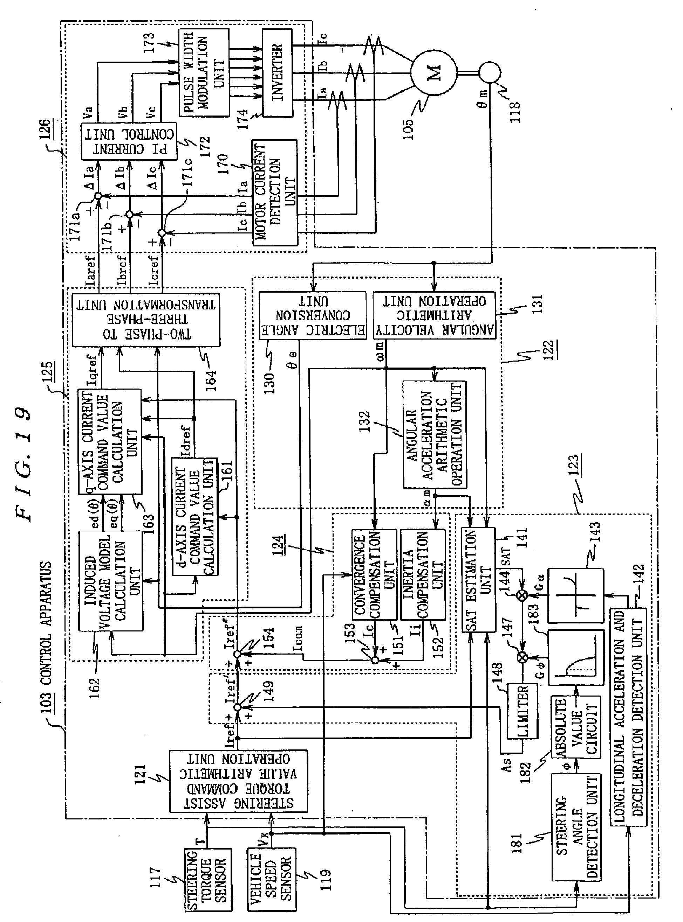

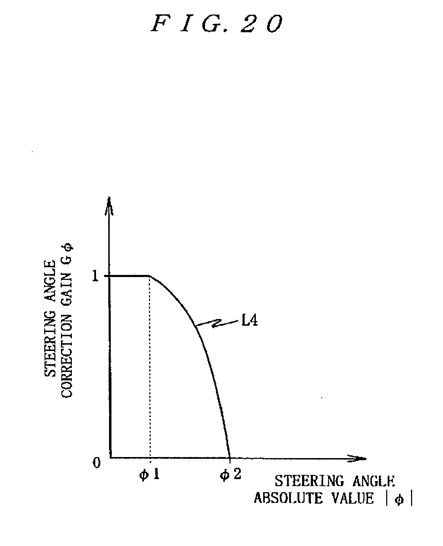

Next, a fourth embodiment of the present invention will be described with reference to FIG. 19 and FIG. 20.

This fourth embodiment is designed to detect a steering angle of the steering apparatus 110 to calculate a correction gain corresponding to the steering angle instead of the case of calculating the steering torque correction gain Gt corresponding to steering torque in the above described third embodiment.

That is, for the fourth embodiment, as illustrated in FIG. 19, in the configuration in FIG. 15 for the above described third embodiment, the absolute value circuit 145 obtaining an absolute value of steering torque T and the steering torque correction gain calculation unit 146 calculating the steering torque correction gain Gt based on the absolute value |T| of steering torque is omitted. Instead of them, a steering angle detection unit 181 detecting a steering angle $\phi$ of the steering shaft 112, an absolute value circuit 182 obtaining an absolute value of a steering angle $\phi$ detected by this steering angle detection unit 181 and a steering angle correction gain calculation unit 183 calculating a steering angle correction gain $G\phi$ based on the absolute value |$\phi$| of the steering angle $\phi$ being output from this absolute value circuit 182 with reference to a steering angle correction gain calculation map illustrated in FIG. 20 are provided. Except that the steering angle correction gain $G\phi$ calculated by the steering angle correction gain calculation unit 183 is supplied to the multiplier 148, the configuration likewise the above described FIG. 15 is adopted. The same reference numerals designate the corresponding portions in FIG. 15 and detailed description thereon will be omitted.

Here, as illustrated in FIG. 20, in the steering angle correction gain calculation map, a characteristic curb L4 is set so that the steering angle correction gain Gϕ is set to "1" during the absolute value |ϕ| of the steering angle ϕ being from "0" to a predetermined value ϕ1 and the absolute value |ϕ| of the steering angle ϕ rapidly decreases corresponding to an increase in the absolute value |ϕ| of the steering angle ϕ in excess of a predetermined value ϕ1 and the steering angle correction gain Gϕ becomes "0" regardless of the increase in the steering angle absolute value |ϕ| when and after the steering angle absolute value |ϕ| reaches a predetermined vale ϕ2.

According to this fourth embodiment, the SAT estimation unit 141 and the acceleration and deceleration correction gain calculation unit 143 are configured likewise the above described third embodiment. Therefore, the steering assist force correction value As gets larger as the self-aligning torque SAT estimated by the SAT estimation unit 141 gets a larger value. Similarly, the steering assist force correction value As gets larger as the absolute value of acceleration and deceleration detected by the acceleration and deceleration detection unit 142 gets larger. In addition to an effect capable of suppressing torque steer during acceleration occurring during acceleration and stabilizing vehicle instability during braking occurring at braking, the steering angle correction gain calculation unit 183 calculates the steering angle correction gain Gϕ corresponding to the absolute value |ϕ| of the steering angle ϕ of the steering shaft 112 with reference to the steering angle correction gain calculation map in FIG. 20. Therefore, it can be accurately determined, based on the steering angle ϕ, whether or not a vehicle is in a straight traveling state. According to whether the straight traveling state goes on, an optimum steering angle correction gain Gϕ can be calculated. Setting the steering assist force correction value As to an optimum value according to the traveling state of the vehicle, good suppression control to eliminate instability behavior of the vehicle can be conducted.

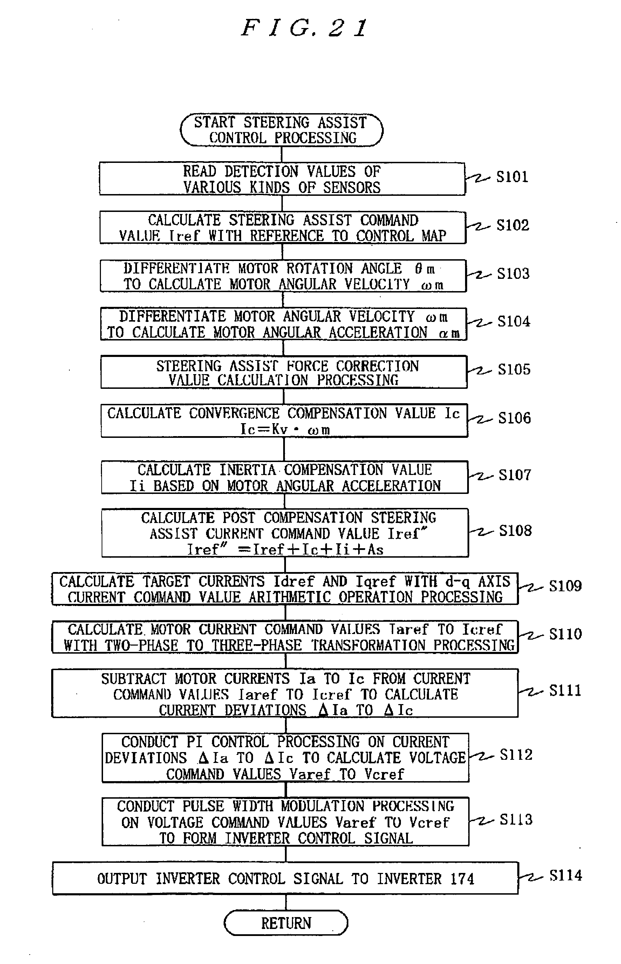

Here, in the above described embodiment, the case of configuring the control apparatus 103 with hardware was described. However, the present invention will not be limited hereto. Applying a microcomputer, functions of the steering assist current command value arithmetic operation unit 121, the motor rotation information arithmetic operation unit 122, the steering assist force correction unit 123, the command value compensation unit 124, the d-q axis current command value arithmetic operation unit 125, the subtractors 171a to 171c of the motor current control unit 126, the current control unit 172 and the pulse width modulation circuit 173 can be processed with software. As processing in that case, a microcomputer configuring a control apparatus can execute a program being stored in a built-in ROM and describing steering assist control processing illustrated in FIG. 21.

Here, the steering assist control processing is executed as timer interruption processing in every predetermined time (1 ms, for example) as illustrated in FIG. 21. At first, in the step S101, detection values of various kinds of sensors such as the steering torque sensor 117, the rotation angle sensor 118, the vehicle speed sensor 119, and the motor current detection unit 170 are read. Subsequently, in the step S102, the steering assist torque command value Iref is calculated based on the steering torque T with reference to the steering assist torque command value calculation map illustrated in the above described FIG. 16. Then the processing proceeds to the step S103.

In this step 103, the motor rotation angle θm undergoes differentiation to calculate the motor angular velocity ωm. Subsequently, in the step S104, the motor angular velocity ωm undergoes differentiation to calculate the motor angular acceleration αm. Subsequently, in the step S105, steering assist force correction value calculation processing corresponding to the steering assist force correction unit 123 is conducted. Thereafter the processing proceeds to the step S106.

In this step S106, likewise the convergence compensation unit 151, multiplying the motor angular velocity ωm by a compensation coefficient Kv being set corresponding to the vehicle speed Vx, the convergence compensation value Ic is calculated. Thereafter the processing proceeds to the step S107.

In this step S107, likewise the inertia compensation unit 152, the inertia compensation value Ii is calculated based on the motor angular acceleration αm. Subsequently, in the step S108, adding the steering assist force correction value As, the convergence compensation value Ic and the inertia compensation value Ii calculated in the steps S105 to S107 to the steering assist current command value Iref, the post compensation steering assist current command value Iref" is calculated. Subsequently, in the step S109, the post compensation steering assist current command value Iref" calculated in the step S109 undergoes the d-q axis current command value arithmetic operation processing likewise the d-q axis current command value arithmetic operation unit 125 to calculate the d-axis target current Idref and the q-axis target current Iqref. Subsequently, in the step S110, two-phase to three-phase transforming processing is conducted to calculate the motor current command value Iaref to Icref.

Subsequently, in the step S111, subtracting the motor currents Ia to Ic from the motor current command values Iaref to Icref, the current deviations ΔIa to ΔIc are calculated.

Subsequently, in the step S112, the current deviations ΔIa to ΔIc undergo PI control processing to calculate the voltage command values Varef to Vcref. Subsequently, in the step S113, based on the calculated voltage command values Varef to Vcref, duty proportion is obtained through arithmetic operation and, thereafter, pulse width modulation is conducted to form an inverter gate signal. Subsequently, in the step S114, the formed inverter gate signal is output to the inverter 174 and, thereafter, the steering assist control processing is finished to restore the predetermined main program.

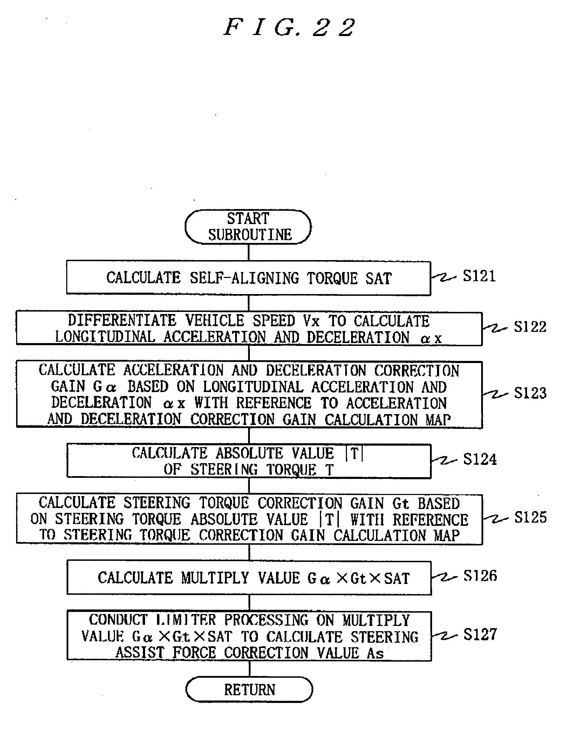

In addition, for the steering assist force correction value calculation processing in the step S105, as illustrated in FIG. 22, the step S121 conducts arithmetic operation of the above described equation (2) based on the steering torque T, the steering assist current command value Iref, the motor angular velocity $\omega$m and the motor angular acceleration $\alpha$m to calculate the self-aligning toque SAT. Subsequently, in the step S122, the vehicle speed Vx undergoes differentiation to calculate the longitudinal acceleration and deceleration $\alpha$x. Thereafter, the processing proceeds to the step S123.

In this step S123, the acceleration and deceleration correction gain G$\alpha$ is calculated based on the longitudinal acceleration and deceleration $\alpha$x with reference to the acceleration and deceleration correction gain calculation map in the above described FIG. 17. Subsequently, in the step S124, the absolute value |T| of the steering torque T is calculated. Subsequently, in the step S125, the steering torque correction gain Gt is calculated based on the absolute value |T| of the steering torque T with reference to the steering torque correction gain calculation map in the above described FIG. 20. Thereafter, the processing proceeds to the step S126.

In this step S126, the acceleration and deceleration correction gain G$\alpha$, the steering torque correction gain Gt and the self-aligning torque SAT are multiplied to calculate the multiply value G$\alpha\times$Gt$\times$SAT. Subsequently, the step S127 conducts limiter processing of limiting the calculated multiply value G$\alpha\times$Gt$\times$SAT within the range of the positive and negative maximum values to calculate the steering assist force correction value As to finish subroutine processing. Then the processing proceeds to the step S106 in the above described FIG. 21.

In the processing in FIG. 21 and FIG. 22, the processing in FIG. 21 corresponds to the steering assist force controlling means; therein, the processing of the step S102 corresponds to the steering assist current command value arithmetic operation unit 121; the processing in the step S103 and the step S104 corresponds to the motor rotation information arithmetic operation unit 122; the processing in the steps S105 and S108 and the processing in FIG. 22 corresponds to the steering assist force correction unit 123; the processing in the steps S106 to S108 corresponds to the command value compensation unit 124; the processing in the steps S109 and S110 corresponds to the d-q axis current command value arithmetic operation unit 125; and the processing in the steps S111 to S114 and the inverter 174 correspond to the motor current control unit 126.

The microcomputer executes the steering assist control processing in FIG. 21 and the steering assist force correction value calculation processing in FIG. 22 and can form an inverter control signal generating the steering assist force suppressing the torque steer occurring during acceleration and the vehicle drift during deceleration occurring during deceleration in an optimum manner likewise the above described embodiment. By supplying the inverter 174 with this inverter control signal, torque steer during acceleration occurring during acceleration and deceleration and the vehicle drift during deceleration during deceleration are suppressed to enable optimum steering assist control.

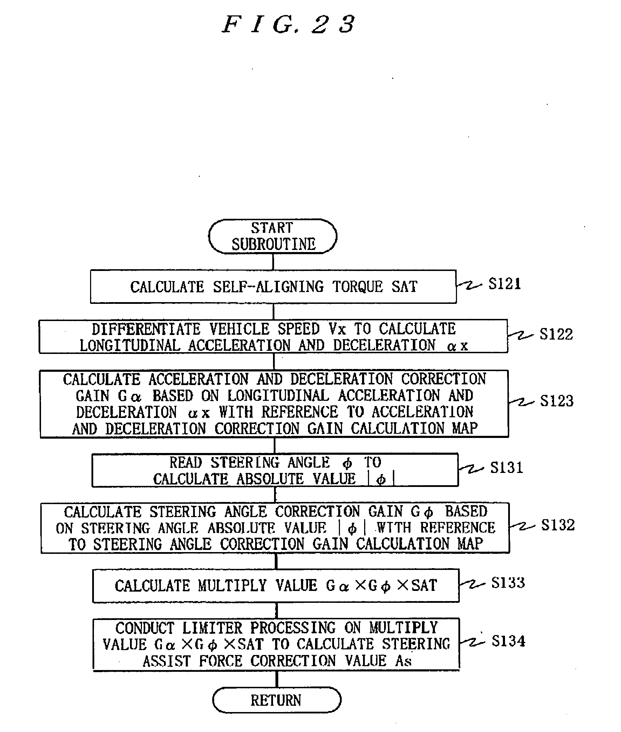

In addition, the steering assist force correction value calculation processing corresponding to the steering assist force correction unit 123 in the above described fourth embodiment can conduct likewise the processing in FIG. 22 except replacing the step S124 in the processing in the above described FIG. 22 with the step S131, as illustrate in FIG. 23, reading the steering angle $\phi$ detected by the steering angle detection unit 181 to calculate the absolute value |T| of the read steering angle $\phi$, replacing the step S125 with the step S132 calculating the steering angle correction gain G$\phi$ based on the steering angle absolute value |$\phi$| with reference to the steering angle correction gain calculation map in the above described FIG. 20, replaces the step S126 with the step S133 calculating the multiply value of G$\alpha\times$G$\phi\times$SAT and, moreover, replacing the step S127 with the step S134 conducting limiter processing on G$\alpha\times$G$\phi\times$SAT to calculate the steering assist force correction value As.

Moreover, for the above described third and fourth embodiments, the case of estimating the self-aligning torque SAT based on the motor angular velocity $\omega$m, the motor angular acceleration $\alpha$m, the steering torque T and the steering assist current command value Iref was described. However, the present invention will not be limited hereto but instead of the steering assist current command value Iref, the motor currents Ia to Ic detected by the motor current detection unit 170 can undergo three-phase to two-phase transformation to calculate the q-axis current Iq to apply the motor assist torque Tma calculated by conducting arithmetic operation in the following equation (3) based on this q-axis current Iq and the motor angular acceleration $\alpha$m.

$$Tma = Kmt \cdot Iq - Jm \cdot \dot{\alpha} \quad \ldots \ldots \quad (3)$$

where Kmt is the torque constant of the motor and Jm is inertia moment of the rotor unit of the motor.

Otherwise, a torque sensor such as a magnetostrictive type torque sensor can be arranged in the torque transmission shaft such as the output shaft of the electric motor 105 and the input and output shafts of the reduction gear mechanism 116 to apply the motor assist torque Tma detected by this torque sensor.

Moreover, for the above described third and fourth embodiments, the case of correcting the steering assist current command value Iref, which has undergone arithmetic operation in the steering assist current command value arithmetic operation unit 121 with the correction value As, was described. However, the present invention will not be limited hereto but, by correcting the three-phase current command values Iaref to Icref, which are calculated by the d-q axis current command value arithmetic operation unit 125, with the correction value As or by correcting the voltage command values Va to Vc, which are calculated by the PI current control unit 172 of the motor current control unit 126, with the correction value As, the steering assist force generated by the electric motor 105 can be corrected.

Moreover, for the above described third and fourth embodiments, the case of applying the present invention to an electric power steering apparatus in a column form with the electric motor 105 being linked to the steering shaft 112 through the reduction gear mechanism 116 was described. However, the present invention will not be limited hereto but the present invention is also applicable to an electric power steering apparatus in a pinion form with an electric motor being linked to the steering gear mechanism 113 through the reduction gear mechanism and an electric power steering apparatus in a rack form with an electric motor being linked to the rack shaft trough the reduction gear mechanism.

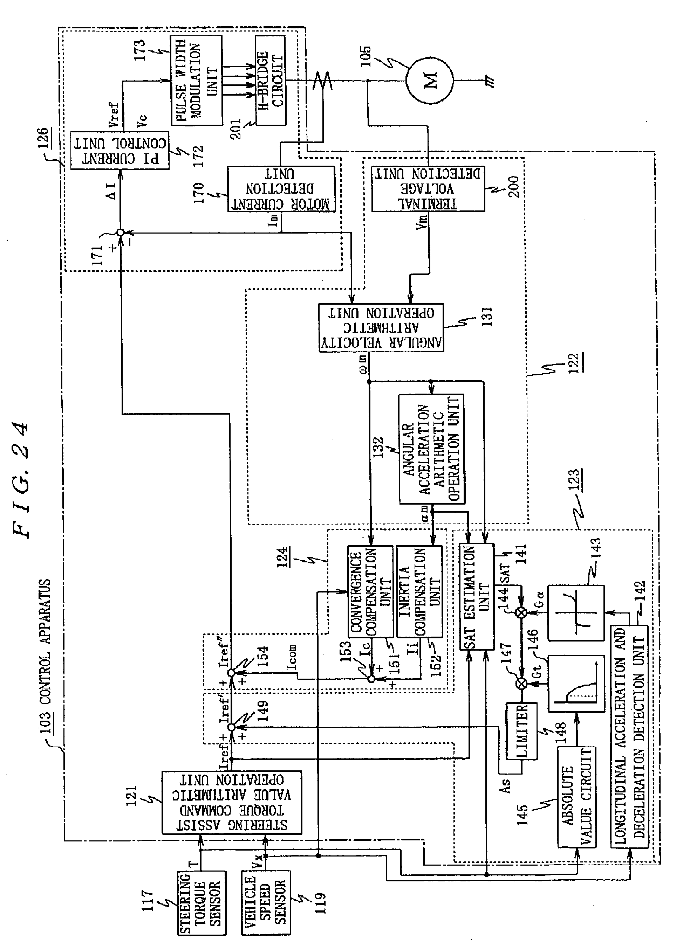

Moreover, for the above described third and fourth embodiments, the case of applying the present invention to a brushless motor was described. However, the present invention will not be limited hereto but in the case of applying to a motor with a brush, as illustrated in FIG. 24, the motor angular velocity ωm can be calculated by the angular velocity arithmetic operation unit 131 of the motor rotation information arithmetic operation unit 122 conducting the arithmetic operation of the following equation (4) based on the motor current detection value Im being output from the motor current detection unit 170 and the motor terminal voltage Vm being output from the terminal voltage detection unit 200; the d-q axis current command value arithmetic operation unit 125 can be omitted to directly supply the motor current control unit 126 with the post compensation steering assist current command value Iref"; and, moreover, the motor current control unit 126 can be replaced by the each one of the subtraction unit 171, the current control unit 172, the pulse width modulation circuit 173 and the inverter 174 can be replaced with an H-bridge circuit 201.

$$\omega m = (Vm - Im \cdot Rm)/K_0 \quad \ldots \ldots \quad (4)$$

where Rm is motor winding resistance and $K_0$ is an electromotive force constant of the motor.

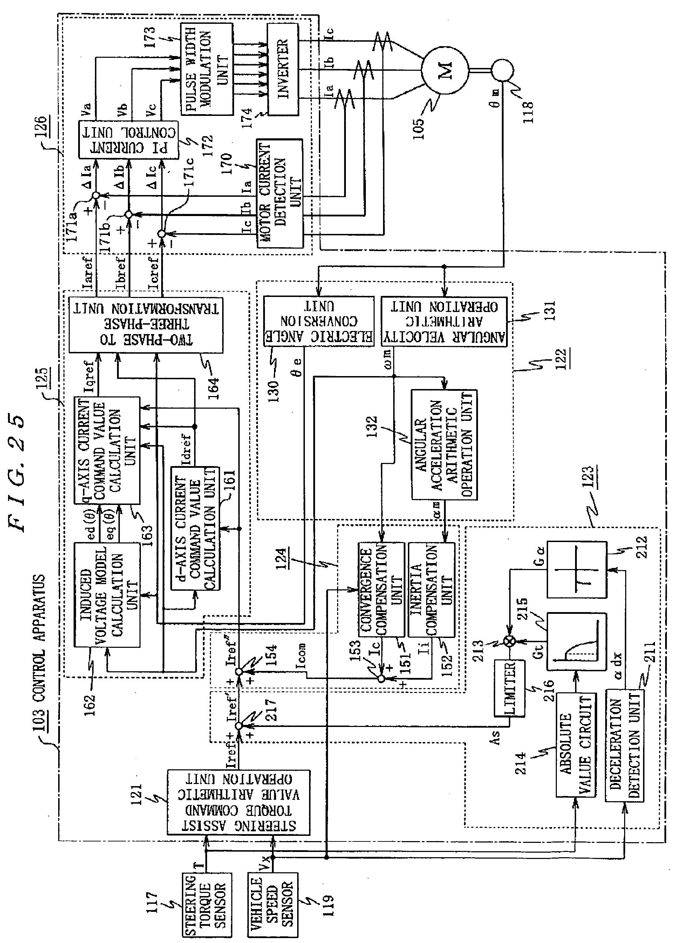

Next, a fifth embodiment of the present invention will be described with reference to FIG. 25 to FIG. 27.

This fifth embodiment is designed to detect deceleration of a vehicle to calculate a steering assist force correction value directly correcting the steering assist current command value Iref.

This fifth embodiment is configured likewise the third embodiment in FIG. 15 except that the steering assist force correction unit 23 is configured as described below in the above described third embodiment. The same reference numerals designate the corresponding portions in FIG. 15 and detailed description thereon will be omitted.

That is, the steering assist force correction unit 123 comprises a deceleration detection unit 211 as deceleration detecting means, a steering assist force correction gain calculation unit 212, a multiplier 213, an absolute value circuit 214 calculating the absolute value of the steering torque T detected by the steering torque sensor 117, a steering torque correction gain calculation unit 215, a limiter 216 and a adder 217.

The deceleration detecting unit 211 differentiates the vehicle speed Vx detected by the vehicle speed sensor 119 to calculate the vehicle deceleration αdx in the longitudinal direction of the vehicle.

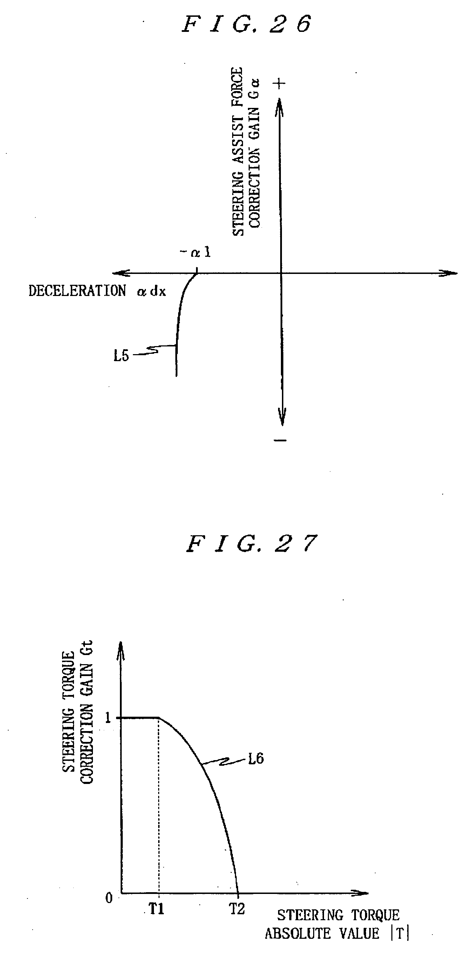

The steering assist force correction gain calculation unit 212 calculates the steering assist force correction gain Gα based on the vehicle deceleration αdx detected by the deceleration detection unit 211 with reference to the steering assist force correction gain calculation map illustrated in FIG. 26 to supply the calculated steering assist force correction gain Gα to the multiplier 213 to which the steering torque correction gain Gt is input from the steering torque correction gain calculation unit 215. As illustrated in FIG. 26, in the steering assist force correction gain calculation map, the steering assist force correction gain Gα is set so that the steering assist force correction gain Gα continues to be "0" during the vehicle deceleration αdx being 0 to a negative predetermined value -α1 and, when the vehicle deceleration αdx exceeds the predetermined value -α1, the steering assist force correction gain Gα steeply increases in the negative direction as the negative value of the vehicle deceleration αdx increases along a characteristic curb L5. Here, the characteristic curb L5 is set to values generating torque from the side of the steering control wheels 115 of the steering apparatus 110 to try to twist the steering shaft 112 due to unbalance in brake force transmitted to the left and right wheels and application of force from various directions to the tires and suspensions at deceleration and allowing suppression on the phenomena causing vehicle deflection disturbing the running orientation at sudden braking when variation in brake force is large and vehicle deceleration is large, that is, vehicle instability during braking.

The steering torque correction gain calculation unit 215 calculates the steering torque correction gain Gt based on the absolute value |T| of the steering torque T being input from the absolute value circuit 214 with reference to the steering torque correction gain calculation map illustrated in FIG. 27 to supply this steering torque correction gain Gt to the multiplier 213 to which the steering assist force correction gain Gα from steering assist force correction gain calculation unit 212 is input. In this steering torque correction gain calculation map, as illustrated in FIG. 27, the characteristic line L6 is set so that the steering torque correction gain Gt is set to "1" during the absolute value |T| of the steering torque T being between "0" and a predetermined value T1 and the steering torque correction gain Gt decreases comparatively steeply corresponding to an increase in the absolute value |T| of the steering torque T when the absolute value |T| of the steering torque T exceeds a predetermined value T1 and becomes "0" regardless of an increase in the steering torque absolute value |T| when and after the steering torque absolute value |T| reaches a predetermined value T2.

The limiter 216 limits the multiply output being output from the multiplier 153 so as to fall within a predetermined range between 0 and the maximum negative values to calculate the steering assist force correction value As. The steering assist force correction value As being output from this limiter 216 is supplied to the adder 217 connected to the output side of the steering assist current command value arithmetic operation unit 121 which corrects the steering assist current command value Iref to calculate the steering assist current correction value Iref'.

Next, operations of the above described embodiment 5 will be described. Now in the case of a braking state with a comparatively large braking force after a vehicle is caused to startup, for example, in the state of whirl traveling of the vehicle, the phenomena causing vehicle deflection disturbing the running orientation at sudden braking when variation in brake force is large and vehicle deceleration is large, that is, vehicle instability during braking occurs due to unbalance in brake force transmitted to the wheels and application of force from various directions to the tires and suspensions.

That is, in the state of providing each wheel of the vehicle with a comparatively large braking force with a braking apparatus by making the force on pedal depressing the brake pedal larger in the case where a vehicle is, for example, in the state where the vehicle is traveling in the whirl traveling, unbalance of the braking force transmitted to the left and right wheels and force from various directions to tires and suspension are added to cause the vehicle to drift to one side of left or right directions, and generates torque trying to twist the steering shaft 112 from the side of the steering control wheels 115 of the steering apparatus 110. In particular, the steering retaining force will become a load during steering retaining, the twisting torque from the side of the steering control wheels 115 and the suspension side is transmitted to the steering shaft 112 through the connection mechanism 114 such as a tie rod and the steering gear mechanism 113.

However, the steering torque sensor 117 will detect torque corresponding to the force twisting the steering shaft 112 from the side of the steering control wheels 115 to drive the electric motor 105 based on this detected torque and to generate a steering assist force in the direction of alleviating the torque being transmitted from the side of the steering control wheels and the suspension. That is, the steering assist force of the electric power steering apparatus will promote the vehicle instability during braking.

Therefore, the deceleration detection unit 211 in the steering assist force correction unit 123 enters the state where negative vehicle deceleration $\alpha dx$ exceeding a comparatively large predetermined value $-\alpha 1$ expressing deceleration is detected to generate vehicle instability during braking and then the steering torque sensor 117 detects the twisting torque being transmitted from the side of the steering control wheels 115 to the steering shaft 112 through the connection mechanism 114 such as a tie rod and the steering gear mechanism 113. Thereby, the steering assist current command value arithmetic operation unit 121 calculates a steering assist current command value Iref setting off the twisting torque.

On the other hand, in the steering assist force correction unit 123, the deceleration detection unit 211 detects a negative vehicle deceleration $\alpha dx$ in excess of a comparatively large predetermined value $-\alpha 1$ expressing deceleration. Therefore, the steering assist force correction gain calculation unit 212 will calculate the steering assist force correction gain $-G\alpha$ being a negative value smaller than "0". This steering assist force correction gain $-G\alpha$ is supplied to the multiplier 213.

This braking state is a steering retaining state in order to suppress vehicle instability during braking and the absolute value |T| of the steering torque T detected by the steering torque sensor 117 becomes a comparatively small value. Therefore, the steering torque correction gain Gt calculated by the steering torque correction gain calculation unit 215 becomes a value in the vicinity of "1". This steering torque correction gain Gt is supplied to the multiplier 213. Thereby, the multiply output of the multiplier 213 will become $-G\alpha \times Gt$, which is supplied to the limiter 216. With this limiter 216, the multiply output $-G\alpha \times Gt$ occasionally being a value within a predetermined range is output directly and is suppressed to the negative maximum value in the case of exceeding the negative maximum value so as to be output as a steering assist force correction value As to the adder 217.

Therefore, the steering assist force correction value As will be added to the steering assist current command value Iref calculated by the steering assist current command value arithmetic operation unit 121. The steering assist force according to the steering torque T generated by the electric motor 105 is suppressed so as not to act in the direction of promoting vehicle instability during braking, enabling suppression on the vehicle instability during braking.

For the suppression on the vehicle instability during braking occurring at this sudden braking, the steering assist correction gain $G\alpha$ will become larger negative value as the vehicle deceleration $\alpha dx$ detected by the deceleration detection unit 211 gets larger, that is, the absolute value with a negative value gets larger, so that the steering assist force correction value As become a large negative value. As vehicle instability during braking occurring at sudden braking gets larger, the steering assist force correction value As becomes larger so that the steering assist current correction value Iref' subjected to correction on the steering assist current command value Iref becomes small to enable ensured suppression on vehicle instability during braking.

Moreover, the steering torque correction gain Gt is set to "1" when the absolute value |T| of the steering torque T is in the vicinity of zero. Thereby, deceleration mainly during straight traveling with desire to suppress vehicle instability during braking can exert the suppression effect on vehicle instability during braking to the maximum limit. During steering when the steering wheel 11 is being steered, the steering assist force correction value As is suppressed to get small to suppress variation in steering performance due to suppression control intervention on vehicle instability during braking in the state of whirl traveling so as to enable optimum steering assist control corresponding to: the status of occurrence of vehicle instability during braking.

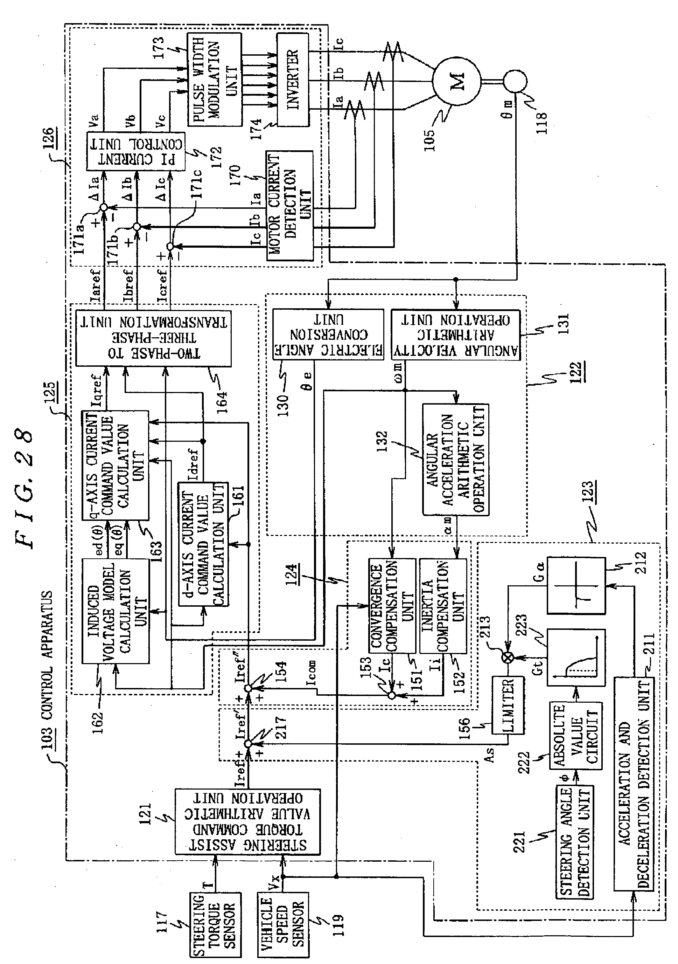

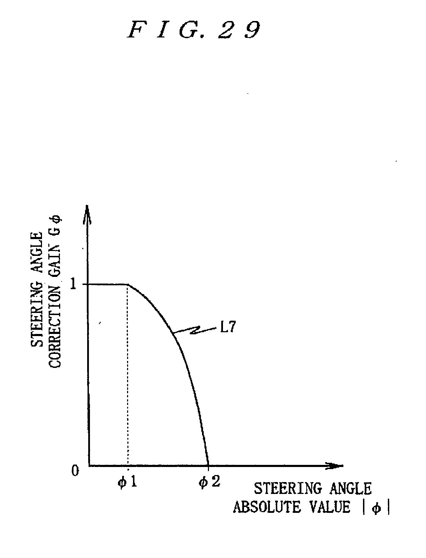

Next, a sixth embodiment of the present invention will be described with reference to FIG. 28 and FIG. 29.

This sixth embodiment is designed to detect a steering angle of the steering apparatus 110 to calculate a correction gain corresponding to the steering angle instead of the case of calculating the steering torque correction gain Gt corresponding to steering torque in the above described fifth embodiment.

That is, for the sixth embodiment, as illustrated in FIG. 28, in the configuration in FIG. 25 for the above described fifth embodiment, the absolute value circuit 214 obtaining an absolute value of steering torque T and the steering torque correction gain calculation unit 215 calculating the steering torque correction gain Gt based on the absolute value |T| of steering torque is omitted. Instead of them, a steering angle detection unit 221 detecting a steering angle φ of the steering shaft 112, an absolute value circuit 222 obtaining an absolute value of a steering angle φ detected by this steering angle detection unit 221 and a steering angle correction gain calculation unit 223 calculating a steering angle correction gain Gφ based on the absolute value |φ| of the steering angle φ being output from this absolute value circuit 222 with reference to a steering angle correction gain calculation map illustrated in FIG. 29 are provided. Except that the steering angle correction gain Gφ calculated by the steering angle correction gain calculation unit 223 is supplied to the multiplier 213, the configuration likewise the above described FIG. 25 is adopted. The same reference numerals designate the corresponding portions in FIG. 25 and detailed description thereon will be omitted.

Here, as illustrated in FIG. 29, in the steering angle correction gain calculation map, a characteristic line L7 is set so that the steering angle correction gain Gφ is set to "1" during the absolute value |φ| of the steering angle φ being from "0" to a predetermined value φ1 and the absolute value |φ| of the steering angle φ rapidly decreases corresponding to an increase in the absolute value |φ| of the steering angle φ when the absolute value |φ| of the steering angle φ exceeds a predetermined value φ1 and the steering angle correction gain Gφ becomes "0" regardless of the increase in the steering angle absolute value |φ| when and after the steering angle absolute value |φ| reaches a predetermined vale φ2.

According to this sixth embodiment, the steering assist force correction gain calculation unit 212 is configured likewise the above described fifth embodiment. Therefore, the steering assist force correction value As gets larger as the absolute value of deceleration detected by the deceleration detection unit 211 gets larger. Therefore, in addition to an effect capable of stabilizing vehicle instability during braking occurring at braking, the steering angle correction gain calculation unit 223 calculates the steering angle correction gain Gφ corresponding to the absolute value |φ| of the steering angle φ of the steering shaft 112 with reference to the steering angle correction gain calculation map in FIG. 29. Therefore, it can be accurately determined, based on the steering angle φ, whether or not a vehicle is in a straight traveling state. According to whether the straight traveling state goes on, an optimum steering angle correction gain Gφ can be calculated. Setting the steering assist force correction value As to an optimum value according to the traveling state of the vehicle, good suppression control to eliminate instability behavior of the vehicle can be conducted.

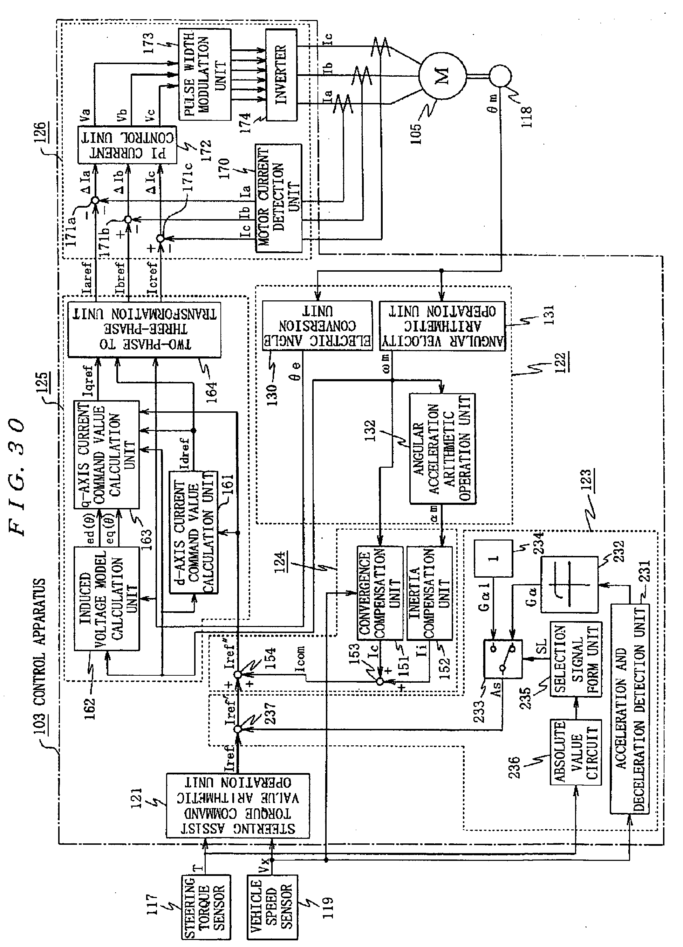

Next, a seventh embodiment of the present invention will be described with reference to FIG. 30 to FIG. 31.

This seventh embodiment is designed to conduct arithmetic operation to obtain the correction gain based on the vehicle acceleration and deceleration αx and multiply the correction gain subjected to arithmetic operation by the steering assist current command value Iref subjected to arithmetic operation with the steering assist current command value arithmetic operation unit 121 to reduce and correct the steering assist force during deceleration.

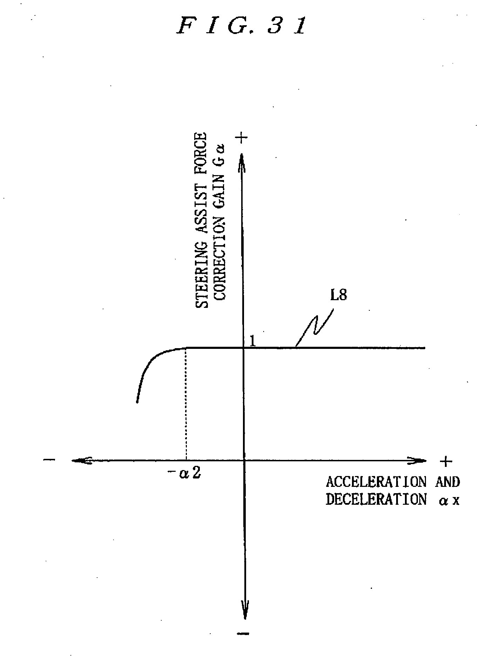

That is, in the seventh embodiment, as illustrated in FIG. 30, the steering assist force correction unit 123 is different from that in the above described fifth and sixth embodiments and includes a acceleration and deceleration detection unit 231 differentiating the vehicle speed Vs detected by the vehicle speed sensor 119 to calculate the vehicle acceleration and deceleration αx in the vehicle longitudinal directions so that the vehicle acceleration and deceleration αx detected by this acceleration and deceleration detection unit 231 is supplied to the steering assist force correction gain calculation unit 232. This steering assist force correction gain calculation unit 232 calculates the steering assist force correction gain Gα based on the vehicle acceleration and deceleration αx with reference to the steering assist force correction gain calculation map illustrated in FIG. 31 to supply the calculated steering assist force correction gain Gα to one of the input sides of the selection unit 193.

Here, as illustrated in FIG. 31, in the steering assist force correction gain calculation map, a characteristic curb L8 is set so that the steering assist force correction gain Gα becomes "1" when the vehicle acceleration and deceleration αx is a positive value expressing acceleration; the steering assist force correction gain Gα continues to be "1" during the vehicle acceleration and deceleration αx being from "0" to reaching the predetermined value -α2 when the vehicle acceleration and deceleration αx is a negative value expressing deceleration; and the steering assist force correction gain Gα decreases gradually to lower than "1" as the vehicle acceleration and deceleration αx increases in the negative direction when the vehicle acceleration and deceleration αx exceeds the predetermined value -α2.

On the other hand, the steering assist force correction gain Gα1 being output from the steering assist force correction gain generation unit 234 outputting the steering assist force correction gain Gα1 being always "1" is input to the other input side of the selection unit 233. As for the steering assist force correction gains Gα and Gα1 being input to each input unit, the steering assist force correction gain Gα1 being output from the steering assist force correction gain generation unit 234 is selected when the selection signal SL being input from the selection signal form unit 235 is logical value "0"; when the selection signal SL is the logical value "1", the steering assist force correction gain Gα being output from the steering assist force correction gain calculation unit 232 is selected; and the selected steering assist force correction gain Gα or Gα1 is output to the multiplier 237 inserted between the steering assist current command value arithmetic operation unit 121 and the adder 154.

The absolute value |T| of the steering torque T being input from the absolute value circuit 236 conducting arithmetic operation to obtain an absolute value of the steering torque T being input from the steering torque sensor 117 is input to the selection signal form unit 235. When this absolute value |T| of the steering torque T exceeds a predetermined value T3 being set in advance, the selection signal SL with the logical value "0" is output to the selection unit 233. When the absolute value |T| of the steering torque T is not more than a predetermined value T3, the selection signal SL with the logical value "1" is output to the selection unit 233.

Next, operations of the above described seventh embodiment will be described.

Now, when a vehicle is in a halt state, the vehicle acceleration and deceleration αx detected by the acceleration and deceleration detection unit 231 is "0" and, therefore, the steering assist force correction gain Gα calculated by the steering assist force correction gain calculation unit 232 will become "1".

In this halt state of the vehicle, in the state of non-steering state where the steering wheel 111 is not steered, the steering torque T detected by the steering torque sensor 117 is "0" and not more than the predetermined value T3. Therefore, the selection signal SL with the logical value "1" in the selection signal form unit 235 is output to the selection unit 233. Thereby, this selection unit 233 selects the steering assist force correction gain Gα being output from the steering assist force correction gain calculation unit 232. The selected steering assist force correction gain Gα is supplied to the multiplier 237 and is multiplied by the steering assist current command value Iref obtained through arithmetic operation in the steering assist current command value arithmetic operation unit 121 so that the steering assist current command value Iref will directly become the steering assist current correction value Iref'.

At that time, the steering torque T detected by the steering torque sensor 117 is "0" and the steering assist current command value Iref obtained through arithmetic operation in the steering assist current command value arithmetic operation unit 121 also becomes "0". Therefore, the multiplying output of the multiplier 237 also becomes "0" and the electric motor 105 is in a rotation halt. Since the motor angular velocity ωm and the motor angular acceleration αm obtained through arithmetic operation in the motor rotation information arithmetic operation unit 122 are "0", the compensation value Icom being output from the command value compensation unit 124 also continues to be "0".

Therefore, the post compensation current command value Iref" also becomes "0". Likewise the above described fifth embodiment, the three-phase current command values Iaref, Ibref and Icref being output from the d-q axis current command value arithmetic operation unit 125 also become "0". The motor currents Ia to Ic being output from the motor current control unit 126 also become "0" so that the electric motor 105 continue its halt state.

In this halt state of the vehicle, the steering wheel 111 is steered to conduct so-called steering at stationary condition. Then, the absolute value |T| of the steering torque T being detected by the steering torque sensor 117 becomes a comparatively large value, which will exceed the predetermined value T3. Therefore, the selection signal form unit 235 forms a selection signal with the logical value "0", which is supplied to the selection unit 233. This selection unit 233 selects the steering assist force correction gain Gα1 of "1" being output from the steering assist force correction gain generation unit 234 which the multiplier 237 multiplies by the steering assist command value Iref obtained through arithmetic operation in the steering assist current command value arithmetic operation unit 121. This steering assist current command value Iref will directly become the steering assist current correction value Iref'.

Thus, at the time of a halt of a vehicle, the steering assist force correction gain Gα and Gα1 calculated by the steering assist force correction unit 123 both become "1". Therefore, the steering assist current command value Iref obtained through arithmetic operation in the steering assist current command value arithmetic operation unit 121 will directly become the steering assist current correction value Iref'.

In addition, entering acceleration state by causing a vehicle to start up from the halt state of the vehicle, vehicle acceleration and deceleration αx detected by the acceleration and deceleration detection unit 231 become a positive value. Thereby, the steering assist force correction gain Gα calculated by the steering assist force correction gain calculation unit 232 continues to be "1". Thereby, likewise the time of a vehicle halt, the steering assist current command value Iref obtained through arithmetic operation in the steering assist current command value arithmetic operation unit 121 will directly become the steering assist current correction value Iref'.

However, entering a deceleration state by making the force on pedal depressing the brake pedal in the state where the vehicle is traveling in the traveling state, and entering the state where the vehicle acceleration and deceleration $\alpha x$ being a negative value detected by the acceleration and deceleration detection unit 231 exceeds the predetermined value $-\alpha 2$, the steering assist force correction gain $G\alpha$ calculated by the steering assist force correction gain calculation unit 232 will decrease from "1".

In this deceleration state, in the state of traveling on a straight course or a moderate corner, the absolute value |T| of the steering torque T detected by the steering torque sensor 117 will become not more than the predetermined value T3. Therefore, the selection signal form unit 235 outputs the selection signal SL with the logical value "1" to the selection unit 233. Therefore, the selection unit 233 selects the steering assist force correction gain $G\alpha$ being output from the steering assist force correction gain calculation unit 232, which is supplied to the multiplier 237.

Therefore, the multiplier 237 multiplies the steering assist current command value Iref obtained through arithmetic operation in the steering assist current command value arithmetic operation unit 121 by the steering assist force correction gain $G\alpha$ being smaller than "1". Therefore, the steering assist current correction value Iref' being output from this multiplier 237 will become a value smaller than the steering assist current command value Iref. This steering assist current command value Iref' undergoes compensation processing in the command value compensation unit 124. The d-q axis current command value arithmetic operation unit 125 is supplied with the post steering assist current command value Iref" to calculate three-phase current command values Iaref to Icref.

And, the calculated three-phase current command values Iaref to Icref are supplied to the motor current control unit 126 and the motor currents Ia to Ic are supplied to the electric motor 105. Thereby, the steering assist force corresponding to the steering torque generated by the electric motor 105 is reduced and corrected. Thereby, likewise the above described fifth and sixth embodiments, occurrence of acting in the direction of promoting vehicle instability during braking can be suppressed to enable suppression on vehicle instability during braking.

In addition, also in the deceleration state, the selection unit 233 will select the steering assist force correction gain $G\alpha 1$ of "1" being output from the steering assist force correction gain generation unit 234 when the selection signal SL detected by the selection signal forming unit 235 is logical value "0" in the case where the absolute value |T| of the steering torque T detected by the steering torque sensor 117 is a value exceeding the predetermined value T3. The multiplier 237 multiplies this steering assist force correction gain $G\alpha 1$ of "1" by the steering assist current command value Iref obtained through arithmetic operation in the steering assist current command value arithmetic operation unit 121. Therefore, this steering assist current command value Iref will directly become the steering assist current correction value Iref'. Without reducing and correcting the steering assist force generated by the electric motor 105, optimum steering assist force according to a steering state of the steering wheel 111 intended by a driver can be generated.

Thus, in the seventh embodiment, when the absolute value |T| of the steering torque T detected by the steering torque sensor 117 is not more than the predetermined value T3, the selection unit 233 selects the steering assist force correction gain calculation unit 232. When the vehicle enters a deceleration state with deceleration exceeding the predetermined value $-\alpha 2$, the steering assist force correction gain $G\alpha$ calculated by the steering assist force correction gain calculation unit 232 will become a value less than "1". The multiplier 237 multiplies this steering assist force correction gain $G\alpha$ by the steering assist current command value Iref obtained through arithmetic operation in the steering assist current command value arithmetic operation unit 121. Thereby the steering torque current correction value Iref' subjected to reduction and correction on the steering assist current command value Iref is calculated. Thereby, the steering assist force generated by the electric motor 105 is suppressed to enable ensured suppression on vehicle instability during braking occurring at sudden braking.

Here, in the above described fifth to seventh embodiments, the case of configuring the control apparatus 3 with hardware was described. However, the present invention will not be limited hereto. Applying a microcomputer, functions of the steering assist current command value arithmetic operation unit 121, the motor rotation information arithmetic operation unit 122, the steering assist force correction unit 123, the command value compensation unit 124, the d-q axis current command value arithmetic operation unit 125, the subtractor unit 171a to 171c of the motor current control unit 126, the current control unit 172 and the pulse width modulation circuit 173 can be processed with software. As processing in that case, a microcomputer configuring a control apparatus 103 can execute a program being stored in a built-in ROM and describing steering assist control processing in the above described third embodiment illustrated in FIG. 21.

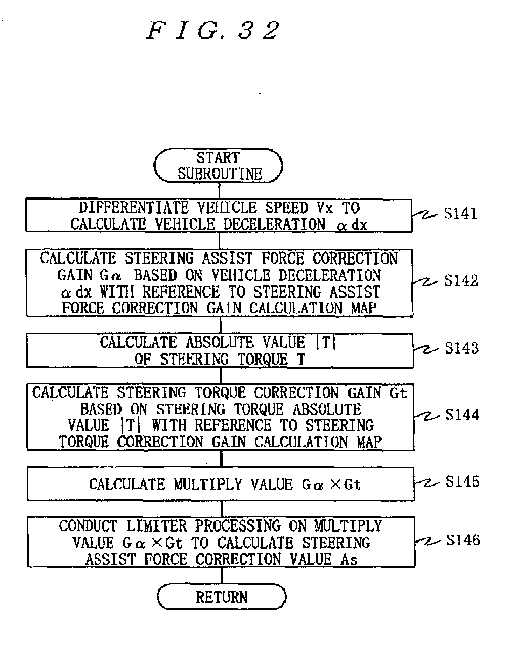

In addition, as for the steering assist force correction value calculation processing of the step S105 in FIG. 21, as illustrated in FIG. 32, at first, the vehicle speed Vx undergoes differentiation in the step S141 to calculate the vehicle deceleration $\alpha dx$. Thereafter, in the step S142, the steering assist force correction gain $G\alpha$ is calculated based on the vehicle deceleration $\alpha dx$ with reference to the steering assist force correction gain calculation map in the above described FIG. 26. Subsequently, in the step S143, the absolute value |T| of the steering torque T is calculated. Subsequently, in the step S144, the steering torque correction gain Gt is calculated based on the absolute value |T| of the steering torque T with reference to the steering torque correction gain calculation map in the above described FIG. 27. Thereafter, the step S145 is conducted.

In this step S145, the steering assist force correction gain $G\alpha$ is multiplied by the steering torque correction gain Gt to calculate the multiply value Gα×Gt. Subsequently, in the step S146, limiter processing of limiting the calculated multiply value Gα×Gt within the range of the negative maximum value is conducted to calculate the steering assist force correction value As to finish subroutine processing. Then the processing proceeds to the step S106 in the above described FIG. 21.

This processing in FIG. 32 corresponds to the steering assist force correction unit 123.

The microcomputer executes the steering assist control processing in FIG. 21 and the steering assist force correction value calculation processing in FIG. 32 and can form an inverter control signal generating the steering assist force suppressing the vehicle drift during deceleration occurring during deceleration in an optimum manner likewise the above described third embodiment. By supplying the inverter 174 with this inverter control signal, the vehicle drift during deceleration occurring during deceleration is suppressed to enable optimum steering assist control.

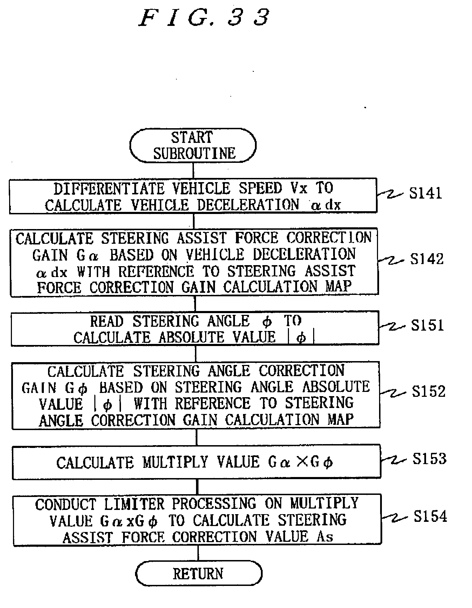

In addition, the steering assist force correction value calculation processing corresponding to the steering assist force correction unit 123 in the above described sixth embodiment can conduct likewise the processing in FIG. 32 except replacing the step S143 in the processing in the above described FIG. 32 with the step S151, as illustrated in FIG. 33, reading the steering angle φ detected by the steering angle detection unit 221 to calculate the absolute value |φ| of the read steering angle φ, replacing the step S144 with the step S152 calculating the steering angle correction gain Gφ based on the steering angle absolute value |φ| with reference to the steering angle correction gain calculation map in the above described FIG. 29, replacing the step S145 with the step S153 calculating the multiply value Gα×Gφ and, moreover replacing the step S146 with the step S154 conducting limiter processing on multiply value Gα×Gφ to calculate the steering assist force correction value As.

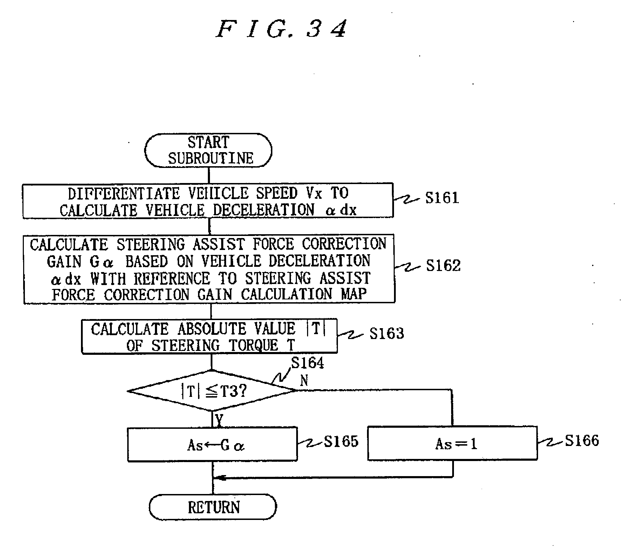

Moreover, the steering assist force correction value calculation processing corresponding to the steering assist force correction unit 123 in the above described seventh embodiment, as illustrated in FIG. 34, at first the step S161 differentiates the vehicle speed Vx to calculate the vehicle acceleration and deceleration αx. Subsequently, in the step S162, the steering assist force correction gain Gα is calculated based on the vehicle acceleration and deceleration αx with reference to the steering assist force correction gain calculation map in FIG. 31. Thereafter, the processing proceeds to the step S163.

In this step S163, the steering torque T is read to calculate the absolute value |T| of this steering torque T. Subsequently, in the step S164, it is determined whether or not the calculated absolute value |T| of the steering torque T exceeds the predetermined value T3. For |T|≤T3, the processing proceeds to the step S165. The steering assist force correction gain Gα calculated in the above described step S162 is set as the steering assist force correction value As. Thereafter, the processing proceeds to the step S106 in FIG. 21. For |T|≥T3, in the step S166, the steering assist force correction value As is set to "1". Thereafter, the processing proceeds to the step S106 in FIG. 21.

In addition, the processing in the step S108 in FIG. 21 is changed so as to conduct arithmetic operation of the following equation (5) multiplying the steering assist current command value Iref by the steering assist force correction value As.

$$\mathtt{Iref"=IrefxAs+Ic+Ii\ \ \ ......\ \ (5)}$$

The processing in this FIG. 34 and the processing in the steps S105 and S108 correspond to the steering assist force correction unit 123.

Moreover, also for the above described fifth to seventh embodiments, the case of applying the present invention to an electric power steering apparatus in a column form with the electric motor 105 being linked to the steering shaft 112 through the reduction gear mechanism 116 was described. However, the present invention will not be limited hereto but the present invention is also applicable to an electric power steering apparatus in a pinion form with an electric motor being linked to the steering gear mechanism 113 through the reduction gear mechanism and an electric power steering apparatus in a rack form with an electric motor being linked to the rack shaft through the reduction gear mechanism.

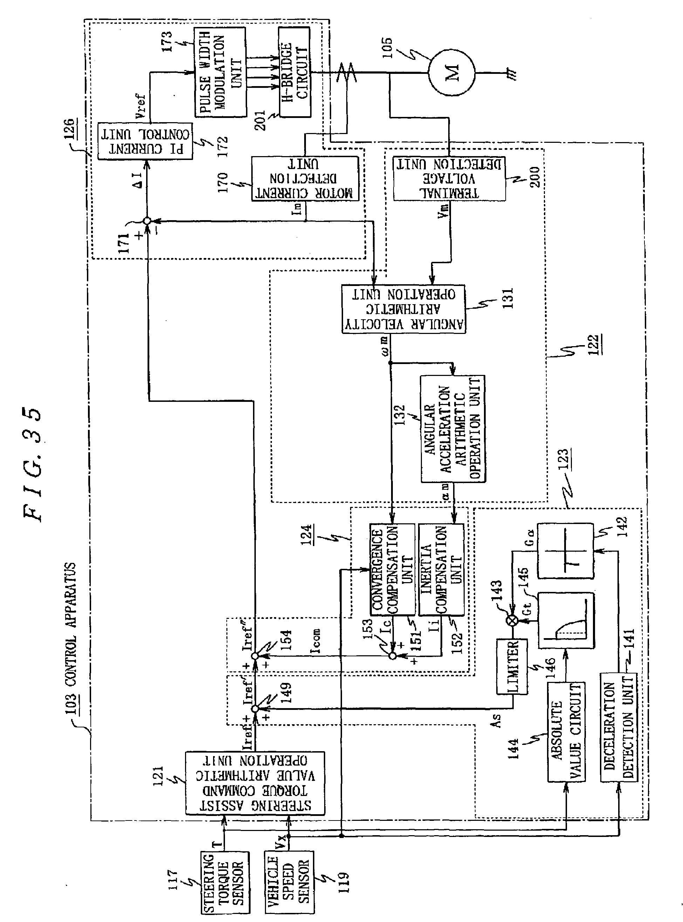

Moreover, for the above described fifth to seventh embodiments, the case of applying the present invention to a brushless motor was described. However, the present invention will not be limited hereto but in the case of applying to a motor with a brush, as illustrated in FIG. 35, the motor angular velocity ωm can be calculated by the angular velocity arithmetic operation unit 131 of the motor rotation information arithmetic operation unit 122 conducting the arithmetic operation of the following equation (4) based on the motor current detection value Im being output from the motor current detection unit 170 and the motor terminal voltage Vm being output from the terminal voltage detection unit 200; the d-q axis current command value arithmetic operation unit 125 can be omitted to directly supply the motor current control unit 126 with the post-torque command value Iref"; and, moreover, the motor current control unit 126 can be replaced by the each one of the subtractor unit 171, the current control unit 172 and the pulse width modulation circuit 173 and the inverter 174 can be replaced with an H-bridge circuit 201 in the motor current control unit 126.

In addition, for the above described fifth to seventh embodiments, the case of differentiating the vehicle speed Vx to calculate the vehicle deceleration αdx or the vehicle acceleration and deceleration αx was described. However, the present invention will not be limited hereto but an acceleration sensor detecting the longitudinal acceleration and deceleration of a vehicle can be provided.

Moreover, for the above described fifth to seventh embodiment, the case of reducing and correcting the steering assist current command value Iref obtained through arithmetic operation in the steering assist current command value arithmetic operation unit 121 with the correction value As was described. However, the present invention will not be limited hereto but the steering assist force generated by the electric motor 105 can be reduced and corrected by reducing and correcting the three-phase current command values Iaref to Icref calculated by the d-q axis current command value arithmetic operation unit 125 with the correction value As or reducing and correcting the voltage command value Va to Vc calculated by the PI current control unit 172 of the motor current control unit 126 with the correction value As.

The electric power steering apparatus, the control method of the electric power steering apparatus and the program for the electric power steering apparatus related to the present invention are useful in the case of alleviating torque steer and vehicle instability during braking and in the case of preventing torque steer and vehicle instability during braking.

**Claims**

1. An electric power steering apparatus controlling a steering assist motor based on a steering assist command value calculated based on at least steering torque occurring to a steering system of a vehicle, and a current detection value of said steering assist motor which gives a steering assist force to said steering system, comprising:

   compensation control means conducting compensation control that compensates steering characteristics of said steering system by compensating said steering assist command value, and determining a compensation amount of said compensation control based on longitudinal acceleration of said vehicle.

2. The electric power steering apparatus according to claim 1, wherein said compensation control means switches a control content of said compensation control based on a sign of the longitudinal acceleration of said vehicle.

3. The electric power steering apparatus according to claim 1, wherein said compensation control includes torque differentiation compensation control for enhancing responsiveness, convergence compensation control that controls steering wheel rotation in a direction to inhibit the steering wheel rotation, and inertia compensation control that assists the steering wheel rotation and controls the steering wheel rotation in a rotating direction, and said compensation control means changes compensation amounts of said torque differentiation compensation control, said convergence compensation control and said inertia compensation control, based on the longitudinal acceleration of said vehicle.

4. The electric power steering apparatus according to claim 3, wherein when the longitudinal acceleration of said vehicle is a predetermined positive value or more, said compensation control means increases the compensation amount of said torque differentiation compensation control as compared with a time of ordinary control, increases the compensation amount of said convergence compensation control as compared with a time of ordinary control, and decreases the control amount of said inertia compensation control as compared with a time of ordinary control.

5. The electric power steering apparatus according to claim 3, wherein when the longitudinal acceleration of said vehicle is a predetermined negative value or less, said compensation control means decreases the compensation amount of said torque differentiation compensation control as compared with a time of ordinary control, increases the compensation amount of said convergence compensation control as compared with a time of ordinary control, and decreases the compensation amount of said inertia compensation control as compared with a time of ordinary control.

6. The electric power steering apparatus according to claims 3, wherein said compensation control means changes said predetermined value based on an SAT (self-aligning torque) value or a steering angle detection value.

7. An electric power steering apparatus including steering torque detecting means detecting steering torque which is inputted in a steering system turning a steering control wheel, a steering assist motor generating steering assist torque which is given to said steering system, and steering assist force control means calculating a current command value based on at least the steering torque detected by said steering torque detecting means to conduct drive control of said steering assist motor, comprising:

self-aligning torque estimating means estimating self-aligning torque which is inputted in said steering system from said steering control wheel side; and
longitudinal acceleration and deceleration detecting means detecting vehicle longitudinal acceleration and deceleration,

wherein said steering assist force control means includes steering assist force correcting means correcting a steering assist force generated by said steering assist motor so as to suppress instability behavior of a vehicle occurring during acceleration and deceleration, based on the self-aligning torque estimated by said self-aligning torque estimating means, and the acceleration and deceleration detected by said longitudinal acceleration and deceleration detecting means.

8. The electric power steering apparatus according to claim 7,
wherein said steering assist force correcting means is configured to make a correction amount for correcting said steering assist force larger as said self-aligning torque becomes larger.

9. The electric power steering apparatus according to claim 7,
wherein said steering assist force correcting means is configured to make a correction amount for correcting said steering assist force larger as said longitudinal acceleration and deceleration become larger.

10. The electric power steering apparatus according to claims 7,
wherein said steering assist force correcting means is configured so as to correct the steering assist force by correcting said current command value.

11. The electric power steering apparatus according to claim 10,
wherein said steering assist force correcting means is configured to set a correction amount which makes said current command value larger at a time of acceleration of the vehicle.

12. The electric power steering apparatus according to claim 10,
wherein said steering assist force correcting means is configured to set a correction amount which makes said current command value smaller at a time of deceleration of the vehicle.

13. The electric power steering apparatus according to claims 7,
wherein said steering assist force correcting means is configured to change said correction amount in accordance with the steering torque detected by said steering torque detecting means.

14. The electric power steering apparatus according to claims 7, further comprising steering angle detecting means detecting a steering angle of said steering system,
wherein said steering assist force correcting means is configured to change said correction amount in accordance with the steering angle detected by said steering angle detecting means.

15. An electric power steering apparatus including steering torque detecting means detecting steering torque which is inputted in a steering system turning a steering control wheel, a steering assist motor generating steering assist torque which is given to said steering system, and steering assist force control means calculating a current command value based on at least the steering torque detected by said steering torque detecting means to conduct drive control of said steering assist motor, comprising:

deceleration detecting means detecting vehicle deceleration,

wherein said steering assist force control means includes steering assist force correcting means calculating a correction value for suppressing instability behavior of a vehicle occurring during deceleration based on the deceleration detected by said deceleration detecting means, and correcting a steering assist force generated by said steering assist motor based on the calculated correction value.

**16.** The electric power steering apparatus according to claim 15,
wherein said steering assist force correcting means is configured to correct said steering assist force by adding said correction value to said current command value.

**17.** The electric power steering apparatus according to claim 15,
wherein said steering assist force correcting means is configured to correct said steering assist force by multiplying said current command value by said correcting value.

**18.** The electric power steering apparatus according to claims 15,
wherein said steering assist force correcting means is configured to make said correction value larger as the deceleration becomes larger.

**19.** The electric power steering apparatus according to claims 15,
wherein said steering assist force correcting means is configured to correct the steering assist force by correcting said current command value.

**20.** The electric power steering apparatus according to claims 15,
wherein said steering assist force correcting means is configured to change said correction value in accordance with the steering torque detected by said steering torque detecting means.

**21.** The electric power steering apparatus according to claims 15, further comprising:

steering angle detecting means detecting a steering angle of said steering mechanism,

wherein said steering assist force correcting means is configured to change said correction value in accordance with the steering angle detected by said steering angle detecting means.

# FIG. 1

- 1
- 12 VEHICLE SPEED SENSOR
- 2
- 10 TORQUE SENSOR
- T
- V
- 3 REDUCTION GEAR
- 20 MOTOR
- 30 CONTROL UNIT
- 11
- 4a
- 13
- 4b
- 5
- BATTERY
- 6
- 14

## *FIG. 2*

**30 CONTROL UNIT**

**40 MCU**

| | | |
|---|---|---|
| EEPROM 44 | | CPU 41 |
| I/F 46 | | ROM 42 |
| A/D CONVERTER 45 | | RAM 43 |

47

**12**

VEHICLE SPEED SENSOR — V

**10**

TORQUE SENSOR — T

**50**
FET PREDRIVER CIRCUIT

Up
Un
Vp
Vn
Wp
Wn

**51**
MOTOR DRIVE CIRCUIT (INVERTER)

R1
R2

**13**

BATTERY **14**

M **20**

POSITION SENSOR **21**

Im
CURRENT DETECTION CIRCUIT **52**

θ
POSITION DETECTION CIRCUIT **53**

FIG. 3

# F I G. 4

## *F I G. 5*

```
                    ┌──────────────┐
                    (    START     )
                    └──────────────┘
                           │
        ┌──────────────────────────────────────┐
        │ READ LONGITUDINAL ACCELERATION αx    │──── S0
        └──────────────────────────────────────┘
                           │
                   ◇─────────────◇    NO
                  ⟨ αx≧αs1 FULFILLED? ⟩────────────────┐
                   ◇─────────────◇  S1                 │
                       │ YES                           │
              ┌────────────────────┐                   │
              │ Kt=Kt0×Kt1         │                   │
              │ Kd=Kd0×Kd1         │──── S2            │
              │ Ki=Ki0×Ki1         │                   │
              └────────────────────┘                   │
                       │        S3                     │
                   ◇─────────────◇                     │
                  ⟨  PREDETERMINED  ⟩  YES             │
                  ⟨  TIME LAPSED?   ⟩──────────┐        │
                   ◇─────────────◇             │        │
                       │ NO            ┌────────────────┐
                       │               │ Kt=Kt0         │──── S4
                       │               │ Kd=Kd0         │
                       │               │ Ki=Ki0         │
                       │               └────────────────┘
                       │◄──────────────────────┘
        ┌──────────────────────────────────────┐
        │ READ MOTOR ROTATION ANGLE SIGNAL θ   │──── S5
        └──────────────────────────────────────┘
                       │
        ┌──────────────────────────────────────┐
        │ CONDUCT ARITHMETIC OPERATION          │──── S6
        │ ON MOTOR ANGULAR VELOCITY ωm          │
        └──────────────────────────────────────┘
                       │
        ┌──────────────────────────────────────┐
        │ CONDUCT ARITHMETIC OPERATION          │──── S7
        │ ON MOTOR ANGULAR ACCELERATION αm      │
        └──────────────────────────────────────┘
                       │
        ┌──────────────────────────────────────┐
        │ READ STEERING TORQUE T AND            │──── S8
        │ STEERING ASSIST COMMAND VALUE I       │
        └──────────────────────────────────────┘
                       │
        ┌──────────────────────────────────────┐
        │ CONDUCT ARITHMETIC OPERATION ON TORQUE│──── S9
        │ DIFFERENTIATION COMPENSATION VALUE It  │
        │ It=Kt×T                                │
        └──────────────────────────────────────┘
                       │
        ┌──────────────────────────────────────┐
        │ CONDUCT ARITHMETIC OPERATION          │──── S10
        │ ON CONVERGENCE COMPENSATION VALUE Id   │
        │ Id=Kd×ωm                               │
        └──────────────────────────────────────┘
                       │
        ┌──────────────────────────────────────┐
        │ CONDUCT ARITHMETIC OPERATION          │──── S11
        │ ON INERTIA COMPENSATION VALUE Ii       │
        │ Ii=Kt×αm                               │
        └──────────────────────────────────────┘
                       │
        ┌──────────────────────────────────────┐
        │ CONDUCT ESTIMATION OPERATION ON        │──── S12
        │ SELF-ALIGNING TORQUE VALUE SAT         │
        └──────────────────────────────────────┘
                       │
        ┌──────────────────────────────────────┐
        │ Tref = I+It+Id+Ii+SAT                  │──── S13
        └──────────────────────────────────────┘
                       │
                ┌──────────────┐
                (    RETURN     )
                └──────────────┘
```

*F I G. 6*

Kt$_1$=F$_1$($\alpha$x), $\alpha$x$\geqq$$\alpha$s$_1$
Kd$_1$=F$_2$($\alpha$x), $\alpha$x$\geqq$$\alpha$s$_1$
Ki$_1$=F$_3$($\alpha$x), $\alpha$x$\geqq$$\alpha$s$_1$

## F I G. 7

START

READ LONGITUDINAL ACCELERATION $\alpha x$ ── S20

$\alpha x \leqq \alpha s_2$ FULFILLED? ── S21 · NO

YES

$Kt = Kt_0 \times Kt_2$
$Kd = Kd_0 \times Kd_2$
$Ki = Ki_0 \times Ki_2$ ── S22

PREDETERMINED TIME LAPSED? ── S23 · YES

NO

$Kt = Kt_0$
$Kd = Kd_0$
$Ki = Ki_0$ ── S24

READ MOTOR ROTATION ANGLE SIGNAL $\theta$ ── S5

CONDUCT ARITHMETIC OPERATION ON MOTOR ANGULAR VELOCITY $\omega m$ ── S6

CONDUCT ARITHMETIC OPERATION ON MOTOR ANGULAR ACCELERATION $\alpha m$ ── S7

READ STEERING TORQUE T AND STEERING ASSIST COMMAND VALUE I ── S8

CONDUCT ARITHMETIC OPERATION ON TORQUE DIFFERENTIATION COMPENSATION VALUE It
$It = Kt \times T$ ── S9

CONDUCT ARITHMETIC OPERATION ON CONVERGENCE COMPENSATION VALUE Id
$Id = Kd \times \omega m$ ── S10

CONDUCT ARITHMETIC OPERATION ON INERTIA COMPENSATION VALUE Ii
$Ii = Kt \times \alpha m$ ── S11

CONDUCT ESTIMATION OPERATION ON SELF-ALIGNING TORQUE VALUE SAT ── S12

$T_{ref} = I + It + Id + Ii + SAT$ ── S13

RETURN

# F I G. 8

$Kt_2=F_4(\alpha x)$, $\alpha x \leqq \alpha s_2$
$Kd_2=F_5(\alpha x)$, $\alpha x \leqq \alpha s_2$
$Ki_2=F_6(\alpha x)$, $\alpha x \leqq \alpha s_2$

## F I G. 9

```
                    ┌──────────┐
                    │  START   │
                    └────┬─────┘
                         ▼
        ┌────────────────────────────────────────┐
        │ READ LONGITUDINAL ACCELERATION αx       ├── S0
        └────────────────┬───────────────────────┘
                         ▼                    S1
                   ◇─────────────────────◇  NO
                   │  αx≧αs1 FULFILLED?   ├──────────────────┐
                   ◇─────────────────────◇                  ▼
                         │ YES                         S21
                         ▼                        ◇──────────────────◇  NO
              ┌────────────────────┐              │ αx≧αs2 FULFILLED? ├──────────┐
              │ Kt=Kt0×Kt1         │              ◇──────────────────◇          │
              │ Kd=Kd0×Kd1         ├── S2              │ YES                     │
              │ Ki=Ki0×Ki1         │         ┌────────────────────┐             │
              └─────────┬──────────┘         │ Kt=Kt0×Kt2         ├── S22        │
                        │                    │ Kd=Kd0×Kd2         │             │
                        │                    │ Ki=Ki0×Ki2         │             │
                        │                    └─────────┬──────────┘             │
                        └─────────────►──────────────┐ │                        │
                                                     ▼ ▼              S23        │
                                              ◇──────────────────◇  YES         │
                                              │  PREDETERMINED    ├─────────►────┤
                                              │  TIME LAPSED?     │              ▼    S24
                                              ◇──────────────────◇        ┌──────────────┐
                                                     │ NO                 │ Kt=Kt0       │
                                                     │                    │ Kd=Kd0       │
                                                     │                    │ Ki=Ki0       │
                                                     │                    └──────┬───────┘
                                                     ◄──────────────────────────┘
```

| | |
|---|---|
| READ MOTOR ROTATION ANGLE SIGNAL $\theta$ | S5 |
| CONDUCT ARITHMETIC OPERATION ON MOTOR ANGULAR VELOCITY $\omega m$ | S6 |
| CONDUCT ARITHMETIC OPERATION ON MOTOR ANGULAR ACCELERATION $\alpha m$ | S7 |
| READ STEERING TORQUE T AND STEERING ASSIST COMMAND VALUE I | S8 |
| CONDUCT ARITHMETIC OPERATION ON TORQUE DIFFERENTIATION COMPENSATION VALUE It $It=Kt×T$ | S9 |
| CONDUCT ARITHMETIC OPERATION ON CONVERGENCE COMPENSATION VALUE Id $Id=Kd×\omega m$ | S10 |
| CONDUCT ARITHMETIC OPERATION ON INERTIA COMPENSATION VALUE Ii $Ii=Kt×\alpha m$ | S11 |
| CONDUCT ESTIMATION OPERATION ON SELF-ALIGNING TORQUE VALUE SAT | S12 |
| $Tref = I+It+Id+Ii+SAT$ | S13 |

```
                    ┌──────────┐
                    │  RETURN  │
                    └──────────┘
```

# FIG. 10

EP 1 967 443 A2

*F I G . 1 1*

PREDETERMINED VALUE $|\alpha s_1|$ AND $|\alpha s_2|$

SAT VALUE

LARGE    NEUTRAL    LARGE

SAT VALUE

SAT VALUE

FIG.12

EP 1 967 443 A2

# FIG. 13

PREDETERMINED VALUE $|\alpha s_1|$ AND $|\alpha s_2|$

STEERING ANGLE
DETECTION VALUE $\phi$

STEERING ANGLE
DETECTION VALUE $\phi$

END          NEUTRAL          END

# F I G. 1 4

*FIG. 15*

# F I G. 1 6

## F I G. 1 7

## F I G. 1 8

F I G . 1 9

103 CONTROL APPARATUS

117 STEERING TORQUE SENSOR

119 VEHICLE SPEED SENSOR

121 STEERING ASSIST TORQUE COMMAND VALUE ARITHMETIC OPERATION UNIT

162 INDUCED VOLTAGE MODEL CALCULATION UNIT

163 q-AXIS CURRENT COMMAND VALUE CALCULATION UNIT

161 d-AXIS CURRENT COMMAND VALUE CALCULATION UNIT

164 TWO-PHASE TO THREE-PHASE TRANSFORMATION UNIT

125

126

173 PULSE WIDTH MODULATION UNIT

172 PI CURRENT CONTROL UNIT

174 INVERTER

170 MOTOR CURRENT DETECTION UNIT

105 M

118 θm

130 ELECTRIC ANGLE CONVERSION UNIT θe

131 ANGULAR VELOCITY ARITHMETIC OPERATION UNIT ωm

132 ANGULAR ACCELERATION ARITHMETIC OPERATION UNIT αm

122

124

151 INERTIA COMPENSATION UNIT Ii

153 CONVERGENCE COMPENSATION UNIT Ic

152

123

141 SAT ESTIMATION UNIT SAT

143

142 LONGITUDINAL ACCELERATION AND DECELERATION DETECTION UNIT

181 STEERING ANGLE DETECTION UNIT

182 ABSOLUTE VALUE CIRCUIT

LIMITER As

144 Gα 183 Gφ 147 148

154 Icom

149 Iref'

Iref''

Iref

Va Vb Vc

ΔIa ΔIb ΔIc

Iaref Ibref Icref

171a 171b 171c

Ic Ib Ia

Ia Ib Ic

ed(θ) eq(θ)

Iqref Idref

*F I G. 2 0*

*F I G. 2 1*

```
          ┌─────────────────────────────┐
          │   START STEERING ASSIST     │
          │     CONTROL PROCESSING      │
          └─────────────────────────────┘
                        │
┌───────────────────────────────────────────┐
│         READ DETECTION VALUES OF           │  ～ S101
│        VARIOUS KINDS OF SENSORS            │
└───────────────────────────────────────────┘
                        │
┌───────────────────────────────────────────┐
│      CALCULATE STEERING ASSIST COMMAND     │  ～ S102
│  VALUE Iref WITH REFERENCE TO CONTROL MAP  │
└───────────────────────────────────────────┘
                        │
┌───────────────────────────────────────────┐
│  DIFFERENTIATE MOTOR ROTATION ANGLE θm     │  ～ S103
│  TO CALCULATE MOTOR ANGULAR VELOCITY ωm    │
└───────────────────────────────────────────┘
                        │
┌───────────────────────────────────────────┐
│  DIFFERENTIATE MOTOR ANGULAR VELOCITY ωm   │  ～ S104
│ TO CALCULATE MOTOR ANGULAR ACCELERATION αm │
└───────────────────────────────────────────┘
                        │
┌───────────────────────────────────────────┐
│        STEERING ASSIST FORCE CORRECTION    │  ～ S105
│         VALUE CALCULATION PROCESSING       │
└───────────────────────────────────────────┘
                        │
┌───────────────────────────────────────────┐
│  CALCULATE CONVERGENCE COMPENSATION VALUE Ic│  ～ S106
│              Ic = Kv · ωm                  │
└───────────────────────────────────────────┘
                        │
┌───────────────────────────────────────────┐
│      CALCULATE INERTIA COMPENSATION VALUE  │  ～ S107
│    Ii BASED ON MOTOR ANGULAR ACCELERATION  │
└───────────────────────────────────────────┘
                        │
┌───────────────────────────────────────────┐
│      CALCULATE POST COMPENSATION STEERING  │  ～ S108
│       ASSIST CURRENT COMMAND VALUE Iref″   │
│         Iref″ = Iref + Ic + Ii + As        │
└───────────────────────────────────────────┘
                        │
┌─────────────────────────────────────────────────┐
│ CALCULATE TARGET CURRENTS Idref AND Iqref WITH d-q AXIS │  ～ S109
│  CURRENT COMMAND VALUE ARITHMETIC OPERATION PROCESSING  │
└─────────────────────────────────────────────────┘
                        │
┌─────────────────────────────────────────────────┐
│ CALCULATE MOTOR CURRENT COMMAND VALUES Iaref TO Icref │  ～ S110
│ WITH TWO-PHASE TO THREE-PHASE TRANSFORMATION PROCESSING │
└─────────────────────────────────────────────────┘
                        │
┌───────────────────────────────────────────┐
│   SUBTRACT MOTOR CURRENTS Ia TO Ic FROM CURRENT│  ～ S111
│   COMMAND VALUES Iaref TO Icref TO CALCULATE   │
│      CURRENT DEVIATIONS ΔIa TO ΔIc         │
└───────────────────────────────────────────┘
                        │
┌───────────────────────────────────────────┐
│    CONDUCT PI CONTROL PROCESSING ON CURRENT│  ～ S112
│  DEVIATIONS ΔIa TO ΔIc TO CALCULATE VOLTAGE│
│        COMMAND VALUES Varef TO Vcref       │
└───────────────────────────────────────────┘
                        │
┌───────────────────────────────────────────┐
│   CONDUCT PULSE WIDTH MODULATION PROCESSING│  ～ S113
│   ON VOLTAGE COMMAND VALUES Varef TO Vcref │
│      TO FORM INVERTER CONTROL SIGNAL       │
└───────────────────────────────────────────┘
                        │
┌───────────────────────────────────────────┐
│  OUTPUT INVERTER CONTROL SIGNAL TO INVERTER 174 │  ～ S114
└───────────────────────────────────────────┘
                        │
              ┌──────────────────┐
              │     RETURN       │
              └──────────────────┘
```

# F I G. 2 2

```
        ┌─────────────────┐
        │     START       │
        │   SUBROUTINE    │
        └────────┬────────┘
                 │
 ┌───────────────────────────────────────┐
 │  CALCULATE SELF-ALIGNING TORQUE SAT    │──── S121
 └───────────────────┬───────────────────┘
                     │
 ┌───────────────────────────────────────┐
 │  DIFFERENTIATE VEHICLE SPEED Vx TO CALCULATE      │──── S122
 │  LONGITUDINAL ACCELERATION AND DECELERATION αx    │
 └───────────────────┬───────────────────┘
                     │
 ┌───────────────────────────────────────┐
 │  CALCULATE ACCELERATION AND DECELERATION CORRECTION  │
 │  GAIN Gα BASED ON LONGITUDINAL ACCELERATION AND      │──── S123
 │  DECELERATION αx WITH REFERENCE TO ACCELERATION      │
 │  AND DECELERATION CORRECTION GAIN CALCULATION MAP    │
 └───────────────────┬───────────────────┘
                     │
 ┌───────────────────────────────────────┐
 │  CALCULATE ABSOLUTE VALUE |T|          │──── S124
 │  OF STEERING TORQUE T                  │
 └───────────────────┬───────────────────┘
                     │
 ┌───────────────────────────────────────┐
 │  CALCULATE STEERING TORQUE CORRECTION GAIN Gt BASED  │
 │  ON STEERING TORQUE ABSOLUTE VALUE |T| WITH REFERENCE │──── S125
 │  TO STEERING TORQUE CORRECTION GAIN CALCULATION MAP  │
 └───────────────────┬───────────────────┘
                     │
 ┌───────────────────────────────────────┐
 │  CALCULATE MULTIPLY VALUE Gα ×Gt× SAT  │──── S126
 └───────────────────┬───────────────────┘
                     │
 ┌───────────────────────────────────────┐
 │  CONDUCT LIMITER PROCESSING ON MULTIPLY │
 │  VALUE Gα ×Gt× SAT TO CALCULATE STEERING │──── S127
 │  ASSIST FORCE CORRECTION VALUE As       │
 └───────────────────┬───────────────────┘
                     │
        ┌─────────────────┐
        │     RETURN      │
        └─────────────────┘
```

# F I G. 2 3

```
┌─────────────────────┐
│       START         │
│    SUBROUTINE       │
└─────────────────────┘
           │
┌─────────────────────────────────────────────┐
│  CALCULATE SELF-ALIGNING TORQUE SAT         │──⟲ S121
└─────────────────────────────────────────────┘
           │
┌─────────────────────────────────────────────┐
│  DIFFERENTIATE VEHICLE SPEED Vx TO CALCULATE │──⟲ S122
│  LONGITUDINAL ACCELERATION AND DECELERATION αx│
└─────────────────────────────────────────────┘
           │
┌─────────────────────────────────────────────┐
│  CALCULATE ACCELERATION AND DECELERATION CORRECTION │
│  GAIN Gα BASED ON LONGITUDINAL ACCELERATION AND     │──⟲ S123
│  DECELERATION αx WITH REFERENCE TO ACCELERATION     │
│  AND DECELERATION CORRECTION GAIN CALCULATION MAP   │
└─────────────────────────────────────────────┘
           │
┌─────────────────────────────────────────────┐
│  READ STEERING ANGLE φ TO                   │──⟲ S131
│  CALCULATE ABSOLUTE VALUE |φ|               │
└─────────────────────────────────────────────┘
           │
┌─────────────────────────────────────────────┐
│  CALCULATE STEERING ANGLE CORRECTION GAIN Gφ BASED  │
│  ON STEERING ANGLE ABSOLUTE VALUE |φ| WITH REFERENCE│──⟲ S132
│  TO STEERING ANGLE CORRECTION GAIN CALCULATION MAP  │
└─────────────────────────────────────────────┘
           │
┌─────────────────────────────────────────────┐
│  CALCULATE MULTIPLY VALUE Gα ×Gφ ×SAT       │──⟲ S133
└─────────────────────────────────────────────┘
           │
┌─────────────────────────────────────────────┐
│  CONDUCT LIMITER PROCESSING ON MULTIPLY     │
│  VALUE Gα ×Gφ ×SAT TO CALCULATE STEERING    │──⟲ S134
│  ASSIST FORCE CORRECTION VALUE As           │
└─────────────────────────────────────────────┘
           │
┌─────────────────────┐
│       RETURN        │
└─────────────────────┘
```

# FIG. 24

*F I G. 2 5*

## F I G. 2 6

## F I G. 2 7

# FIG. 28

EP 1 967 443 A2

## F I G. 2 9

*FIG. 30*

# F I G. 3 1

# F I G. 3 2

```
                    ┌─────────────────┐
                    │      START      │
                    │   SUBROUTINE    │
                    └─────────────────┘
                             │
   ┌─────────────────────────────────────────────┐
   │   DIFFERENTIATE VEHICLE SPEED Vx TO          │  ～ S141
   │   CALCULATE VEHICLE DECELERATION αdx         │
   └─────────────────────────────────────────────┘
                             │
   ┌─────────────────────────────────────────────┐
   │   CALCULATE STEERING ASSIST FORCE CORRECTION │
   │   GAIN Gα BASED ON VEHICLE DECELERATION      │  ～ S142
   │   αdx WITH REFERENCE TO STEERING ASSIST      │
   │   FORCE CORRECTION GAIN CALCULATION MAP      │
   └─────────────────────────────────────────────┘
                             │
   ┌─────────────────────────────────────────────┐
   │   CALCULATE ABSOLUTE VALUE |T|               │  ～ S143
   │   OF STEERING TORQUE T                       │
   └─────────────────────────────────────────────┘
                             │
   ┌─────────────────────────────────────────────┐
   │   CALCULATE STEERING TORQUE CORRECTION GAIN Gt│
   │   BASED ON STEERING TORQUE ABSOLUTE          │  ～ S144
   │   VALUE |T| WITH REFERENCE TO STEERING       │
   │   TORQUE CORRECTION GAIN CALCULATION MAP     │
   └─────────────────────────────────────────────┘
                             │
   ┌─────────────────────────────────────────────┐
   │   CALCULATE MULTIPLY VALUE Gα×Gt             │  ～ S145
   └─────────────────────────────────────────────┘
                             │
   ┌─────────────────────────────────────────────┐
   │   CONDUCT LIMITER PROCESSING ON MULTIPLY     │
   │   VALUE Gα×Gt TO CALCULATE STEERING          │  ～ S146
   │   ASSIST FORCE CORRECTION VALUE As           │
   └─────────────────────────────────────────────┘
                             │
                    ┌─────────────────┐
                    │     RETURN      │
                    └─────────────────┘
```

# FIG. 33

```
        ┌──────────────┐
        │    START     │
        │  SUBROUTINE  │
        └──────────────┘
               │
┌──────────────────────────────────────┐
│  DIFFERENTIATE VEHICLE SPEED Vx TO    │──── S141
│  CALCULATE VEHICLE DECELERATION α dx  │
└──────────────────────────────────────┘
               │
┌──────────────────────────────────────┐
│ CALCULATE STEERING ASSIST FORCE CORRECTION │
│  GAIN Gα BASED ON VEHICLE DECELERATION │──── S142
│  α dx WITH REFERENCE TO STEERING ASSIST │
│  FORCE CORRECTION GAIN CALCULATION MAP │
└──────────────────────────────────────┘
               │
┌──────────────────────────────────────┐
│     READ STEERING ANGLE φ TO          │──── S151
│  CALCULATE ABSOLUTE VALUE |φ|          │
└──────────────────────────────────────┘
               │
┌──────────────────────────────────────┐
│  CALCULATE STEERING ANGLE CORRECTION  │
│ GAIN Gφ BASED ON STEERING ANGLE ABSOLUTE │──── S152
│  VALUE |φ| WITH REFERENCE TO STEERING │
│  ANGLE CORRECTION GAIN CALCULATION MAP │
└──────────────────────────────────────┘
               │
┌──────────────────────────────────────┐
│   CALCULATE MULTIPLY VALUE Gα×Gφ      │──── S153
└──────────────────────────────────────┘
               │
┌──────────────────────────────────────┐
│  CONDUCT LIMITER PROCESSING ON MULTIPLY │
│  VALUE Gα×Gφ TO CALCULATE STEERING    │──── S154
│  ASSIST FORCE CORRECTION VALUE As      │
└──────────────────────────────────────┘
               │
        ┌──────────────┐
        │    RETURN     │
        └──────────────┘
```

# F I G. 3 4

START
SUBROUTINE

DIFFERENTIATE VEHICLE SPEED Vx TO
CALCULATE VEHICLE DECELERATION α dx — S161

CALCULATE STEERING ASSIST FORCE CORRECTION
GAIN G α BASED ON VEHICLE DECELERATION
α dx WITH REFERENCE TO STEERING ASSIST
FORCE CORRECTION GAIN CALCULATION MAP — S162

CALCULATE ABSOLUTE VALUE |T|
OF STEERING TORQUE T — S163

S164

|T| ≦ T3?  N

Y

As ← G α — S165          As = 1 — S166

RETURN

FIG. 35

**EP 1 967 443 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11263233 A
- JP 2006213085 A